# EUROPEAN PATENT APPLICATION

(11) **EP 2 105 823 A1**
(43) Date of publication of application: **30.09.2009**
(21) Application number: 07845978.1
(22) Date of filing: 19.12.2007
(51) Int. Cl.: G06F 3/00

(54) **HUMAN COMPUTER INTERACTION DEVICE, ELECTRONIC DEVICE AND HUMAN COMPUTER INTERACTION METHOD**

(30) Priority: 19.12.2006 CN 200610171339; 12.03.2007 CN 200710086457; 08.05.2007 CN 200710104347; 25.05.2007 CN 200710107261; 06.09.2007 CN 200710147366
(71) Applicant: Qiu, Bo, Hongqihuayuan, New District, Wuxi Jiangsu 214028 (CN)
(72) Inventor: QIU, Bo, Jiangsu 214028 (CN); QIU, Guangjun, Liaoning 110006 (CN)
(74) Representative: Seitz, Holger Fritz Karl
(86) International application number: PCT/CN2007/003670
(87) International publication number: WO 2008/074223

(57) **Abstract**

A human computer interaction device includes the first input device and the second input device, and there are at least a part of the operation regions of the whole function or a certain function of the second input device locating in the key operation regions of the first input device.
The first input device could be a key-input device and the second input device could be a mouse simulation device. An electronic device and a human computer interaction method using the human computer interaction device are further provided.

## Description

### Field of the Invention

The present invention relates to an HCI field, particularly relates to an HCI device, electronic device and HCI method.

### Background of the Invention

In current society, computer is extensively used in the all fields Computer auxiliary devices are indispensable parts of the computer and HCI devices are the important computer auxiliary devices during the human-computer interaction process, such as keyboards, mouse and writing boards, and so on.

In prior arts, the keyboard includes the following two types:

Hard keyboards include external keyboard, such as ordinary desktop external keyboards; keyboards integrated with the host, such as the keyboards integrated with the host of the Notebook and Laptop computers, as well as special keyboards, such as special keyboards ofor numerical control equipment, cash register and other applications, and so on.

Soft keyboard, an on-screen keyboard; information can be input by the mouse or by touching. Soft keyboard, as an input device, can be displayed, used in portable devices, control panel or control panel and other electronic devices.

In prior arts, the mouse function realization devices include the following four types:

External mouse, such as commonly used wheel mouse or optic mouse;

External trackball, an input device similar to a mouse, by directly manually dial the trackball to realize the movement of the cursor. Meanwhile, it is equipped with buttons to realize the functions of the left or right key of the mouse;

Touch pad or touch screen and other touch input or output devices; touch pad, such as the currently widely used touch pad mouse below the host keyboard of the Notebook computers. Use of touch pad is very simple, just touch the touch pad below the keyboard with fingers, the cursor will move; tapping the touch pad surface is identified as click or double click of the mouse and other appropriate operations.

Track Point, invented by IBM Corp, is commonly found in the notebook computers of IBM. A small button is located between G, B, H keys of the keyboard, and two large buttons are located below the blank key Of which, the small button can respond to the size and direction of the finger's thrust force, and therefore control the mouse trajectory, while the functions of the large button below are equivalent to the left and right keys of a standard mouse.

In prior arts, the writing boards include the following two types:

External writing board, connected to the computer to complete the function of input of Chinese characters and graphics;

Composite writing board, integrated with the touch pad, that is, to complete the functions of input of Chinese characters and graphics of writing board on the touch pad

Among the above three commonly used human-machine input devices, the application portfolio of keyboard and mouse in the computer is divided into the following several ways. The writing board can be connected to the host or be achieved with a touch pad

Method I: the mouse is connected to the host externally.

This method is involved in desktop and notebook computers (some people also connect the mouse to the notebook computers for their habits)

The advantage is flexible and convenient use of the mouse; and its disadvantage is to frequently move the forearms because of the separation of the keyboard and the mouse (or writing board), with low working efficiency and inconvenient carrying.

Method II: the device and keyboard to realize the mouse functions are fixed on the host

Such method is the commonly used in the notebook computers. The first one is that a touch pad is provided at the bottom of the fixed keyboard of the notebook computer, and its advantage is that it is necessary to frequently move the forearms during the operation process because of a certain distance between the keyboard and the touch pad, resulting in low working efficiency. The second is that, a Track Point is provided between the two large buttons and keyboard, resulting in a low working efficiency.

### Summary of the Invention

To solve technical problems, the invention creates an HCI device, electronic device, and HCI method, which reduce the zone of the operation of both key-input and mouse function, and both key-input and mouse function are realized without moving forearm so as to increase efficiency.

To solve the foresaid problems, the invention provides an HCI ( Human Computer Interaction) device, comprising the first input device and the second input device, wherein at least parts of the operating zones of one certain or all function(s) of the said second input device locates within the press-key operating zones of the said first input device;
or,
an HCI ( Human Computer Interaction ) device, comprising the second input device or part thereof and the first input device or part thereof, which uses the said region or space within any region of any size at any position of the said part or the whole of the second input device and the said part or the whole of the first input device, that is, wholly or partly overlapping or reuse of' part of the whole of region;
or,
an HCI ( Human Computer Interaction ) device, comprising the second input device or part thereof and the first input device of part thereof, which uses the said region or space within any region of any size at any position of the said part of the whole of the second input device and the said part or the whole of the first input device, that is, wholly or partly overlapping or reuse of part of the whole of region; the said regional overlapping or the regional reuse is the regional overlapping or regional reuse in the same time or in different time.
or,
in the said second input device, at least part operating zone is located within the press-key operating zones of the first input device beyond of the said special/only the mouse function or the limited functional devices. Wherein the limited function devices mean the functions of the said device are limited of the numbers of the functions of the device are limited. The first input device beyond of the special/only the mouse function or the limited functional devices can include but not limited to the hard devices or soft devices;
or,
an HCI ( Human Computer Interaction ) device, comprising the second input device and the first input device used to realize the mouse function. Wherein the zone which the said second input device locates should at least have partly overlapping with the zone the first input device locates. The zone which the said first input device locates consists of the zones which one or several press-keys locate, and it does not include the zones among each input press-keys;
or,
an HCI ( Human Computer Interaction ) device, comprising the touch pad, the touch screen or other hard input device and the first input device used to realize the mouse function. Wherein, the said touch pad, the touch screen or other hard input device are the devices through the touch means. Moreover, the zone where the said touch pad, the touch screen or other hard input devices locate should at least have partly overlapping with the zone the first input device locates
The zone which the said first input device locates consists of zones among which one or several press-keys locate;
or,
an HCI ( Human Computer Interaction ) device, comprising
the second input device and the soft first input device for the realization of the mouse function
Wherein the zone which the said second input device locates should at least have partly overlapping with the zone which the soft first input device locates, The zone which the said first input device locates consists of the zone where one or several input press-keys locate and the zones among which one or several press-keys locate;
or,
an HCI ( Human Computer Interaction ) device, comprising
the second input device and the first soft input device used for the realization of the mouse function.
or,
all the above said the first input device can be replace into the input device, wherein its input device includes the press-key input device

Further, the following can also be the characteristic of the foresaid HCI device:
the said regional overlapping or regional reuse means the regional overlapping or regional reuse within the same time or the different time; or,
the said first input device is the press-key input device, that is, the device to realize the input through the key operations. The said 'key' comprises one or several types of the following forms: the formal, adelomorphic, invisible, or visible key, button, icon, menu items, order, order configuration, display methods, button or the order or the graphic representation which can be operated by clicks, the figures similar to the input/output devices; the keyboard realized or displayed by the software or the formal, adelomorphic, invisible, visible, hidden type, display type ones in the control panel, or the displayed keys, buttons, icons, menu items, orders, order configurations, display methods, buttons or the orders or graphical representations which can be operated by clicks, the figures similar to the input/output devices; or
the said second input device is the mouse simulator device applied for the realization of the mouse function The said mouse function comprises but not limited to one or several following functions: execute, choose, drag, display menu, move cursor, roll display the screen, and the multi directional moving display simultaneously;
the said press-key input device/or the mouse simulator device comprises the following types of the input devices or the input and output device or their combinations, or the realized soft devices in the input and output device: electronic white board, white board, protection keyboard device, touch screen, touch pad, other touch devices, power input devices, electromagnetic induction devices, pressure devices, infrared device, laser device, and machine.

Further, the following can also be the characteristic of the foresaid HCI device:
the said mouse simulator device comprises at least one key parts or all the surface or the parts among the keys or all of the zones. It can locate in one independent zone within the press-key zone of the said press-key input device, or partly locate within the press-key zone, and the left parts locate in other zones;
and/or, the said mouse simulator device reuses with the overlapped zones of the said press-key zones, which at least operates the two modes of the press-key input and the mounting function;
and/or, the said mouse simulator device at least has partly operating zones overlapping or reuse with the press-key operating zones of the said press-key input device. That is, within the same zone, it can work or realize functions of different and randomly several devices.

Further, the following can also be the characteristic of the foresaid HCI device:
the said mouse simulator device comprises one or more auxiliary elements within or beyond of the press-key operating zones of'the said press-key input device Theses auxiliary elements are used to realize all or partly the mouse functions of' the HCI ( Human Computer Interaction ) device; or, theses auxiliary elements are applied to realize partly mouse functions. Wherein it comprises the functions of 'menu display' or 'simultaneous moving display by multi directions'

Further, the following can also be the characteristic of the foresaid HCI device:
in the said HCI ( Human Computer Interaction ) device, there are also set with one or several control switch(es), used to open or close down the mouse functions. This control switch is the soft control switch or the hard control switch. The regions of the above said switch are:
   In the regions or their peripheries where the first or the second input devices locate; or,
in the region where the first input device locates overlapping at least partly with the second input device; or,
in the region of the soft/hard desktop computer keyboard type keyboard, laptop computer keyboard type keyboard or the keyboard the length of the keyboard longer than X cm where partly overlapping with the second input device; wherein X is 8,10,12,14,16 or 18; or,
in the region of the soft/hard desktop computer keyboard type keyboard, laptop computer keyboard type keyboard or the keyboard the length of the keyboard or in the region within the Y cm region of the space press-key of the keyboard length bigger than X cm where partly overlapping with the second input device;

Further, the following can also be the characteristic of the foresaid HCI device:
the said control switch uses one type or the combination of'the following forms: at least one independently set button, at least one pointing rod, at least one roller ball, at least one trolley, at least one group of key combination, at least one operating press-key beyond of the mouse simulator device zone, at least one automatically defined operating method in the said HCI ( Human Computer Interaction ) device.

Further, the following can also be the characteristic of the foresaid HCI device:
the said mouse simulator device comprises one or more main analog devices, and one or more auxiliary elements set within the press-key zone or its periphery of the said press-key input device. The said main analog device and the said touch device altogether realize all or part mouse functions of the said HCI ( Human Computer Interaction ) device, which at least comprises the auxiliary elements for the realization of the cursor moving function and the auxiliary elements for the realization of the mouse key press function;
the said main analog device includes but not limited to the following types of input devices or the input and output devices or their combinations: electronic white board, white board, protection keyboard device, touch screen, touch pad, other touch devices, power input devices, electromagnetic induction devices, pressure devices, infrared device, laser device, and mechanic device

Further, the following can also be the characteristic of the foresaid HCI device:
the said auxiliary element comprises but not limited to one type or the combinations of the following forms: at least one pointing rod, at least one roller ball for controlling the target, at least one trolley for controlling the movement of the object, at least one button for controlling the operation confirmation, at least one touch device and at least one operating press-key works under the mouse function mode.

Further, the following can also be the characteristic of'the foresaid HCI device:
the said key input device is a keyboard. The said mouse simulator device comprises one main analog device set at the left or right side of the said keyboard, and several key-presses set on the other side of the keyboard For these several key-presses, we can choose the standard fingering included one or more key-presses returns to the upper parts when the fingers press the key-press, which is used to realize the key-press function of the mouse; or,
the said key input device is a keyboard. The said mouse simulator device comprises one main analog device set in the side keyboard, and several key-presses set within the key-press zone of the keyboard and beyond of the said main analog device. Among several key-presses, in the standard fingering, the key-press by the left finger is used for the realization of the left key function of the mouse. In the standard fingering, the key-press by the right hand is used for the realization of the right key function of the mouse.

The said main analog device can comprise but not limited to the following types of input devices or the input and output devices or their combinations: electronic white board, white board, protection keyboard device, touch screen, touch pad, other touch devices, power input devices, electromagnetic induction devices, pressure devices, infrared device, laser device, and mechanical device.

Further, the following can also be the characteristic of the foresaid HCI device:
the said key input device is the hard keyboard or the control panel. The said mouse simulator device is the hard device. Within the key-press zone or its periphery of the said key input device, there also are set one or more hard control switches to open or close down the mouse function. Or, in the said mouse simulator device, there are the soft control switches set applied to open and close down the mouse function.

The said key input device is the soft keyboard or the soft control panel displayed in the HCI ( Human Computer Interaction ) device. The said mouse simulator device is displayed in the soft device of the HCI ( Human Computer Interaction ) device. In the said HCI ( Human Computer Interaction ) device, there also are set with one or more hard control switch or soft control switch to open or close the mouse function; the said HCI ( Human Computer Interaction ) device can comprise but not limited to the following types of the input device or the input and output device or their combinations: electronic white board, white board, protection keyboard device, touch screen, touch pad, other touch devices, power input devices, electromagnetic induction devices, pressure devices, infrared device, and laser device.

Further, the following can also be the characteristic of the foresaid HCI device: the said key input device is the displayed soft device in the said HCI ( Human Computer Interaction ) device. And on the surface of the key-press zone, there is set with full transparent or semi-transparent films in the key-press form. In this film, there is set with the keyboard grooves with the tactility; the HCI ( Human Computer Interaction ) device comprises but not limited to one type or the combinations of the following devices: electronic white board, white board, protection keyboard device, touch screen, touch pad, other touch devices, power input devices, electromagnetic induction devices, pressure devices, infrared device, laser device.

Further, the following can also be the characteristic of the foresaid HCI device: the said mouse simulator device comprises one main analog device. The said key input device and the said main analog device are both the hard device The parts of the main analog device in the key-press zone of the said key input device consist of one or more small blocks of main analog devices of accordant scale with the key-press forms of the said key input device, and divided as per the normal boundary of locations of keys. Further, in the small block of the main analog device, there are the flexible mechanisms which flex or move vertically. The said main analog device can comprise but not limit to the following types of input devices or input and output devices or their combinations: electronic white board, white board, protection keyboard device, touch screen, touch pad, other touch devices, power input devices, electromagnetic induction devices, pressure devices, infrared device, laser device, and mechanical device.

Further, the following can also be the characteristic of the foresaid HCI device: the said mouse simulator device comprises a main analog device The said main analog device is divided into several zones formally, implicitly, invisibly, or visibly or in hidden way, in indication way. The realized mouse function in each zone can be different. Each said zones and its functions are fixed, varied or configurable; The said main analog device can comprise but not limit to the following types of devices or their combinations: electronic white board, white board, protection keyboard device, touch screen, touch pad, other touch devices, power input devices, electromagnetic induction devices, pressure devices, infrared device, laser device, and mechanical device.

### An electronic device comprises the said HCI ( Human Computer Interaction ) device.

Further, the following can also be the characteristic of the foresaid electronic device: the said HCI ( Human Computer Interaction ) device is the handset, other hand-held device or the keyboard type and integrated keyboard of the notebook PC Or, they can be the keyboard of the desktop PC and the mouse simulator device set in the keyboard; or, it can be the mouse simulator device which is set in the keyboard of the said electronic device formally, in hidden way, invisibly, or visibly, displayed, explicitly or hiddenly set in the keyboard of the said electronic device; or, they can be the soft devices which are set in the input and output devices of the said electronic devices which are set formally, in hidden way, invisibly, or visibly, displayed, explicitly or hiddenly in the keyboard of the said electronic device; The said input or output device can comprise but not limited to the following types of input and output devices or their combinations: electronic white board, white board, protection keyboard device, touch screen, touch pad, other touch devices, power input devices, electromagnetic induction devices, pressure devices, infrared device, and laser device

Further, the following can also be the characteristic of the foresaid electronic device: the said HCI ( Human Computer Interaction ) device is the soft device which is displayed in the input and output device included in the said electronic device. The said input and output device determines the displayed device or contents through the control of the hardware or the software It comprises the realization of several types of display devices or the snaps of the displayed contents. The said input or output device can comprise but not limited to the following types of input and output devices or their combinations: electronic white board, white board, protection keyboard device, touch screen, touch pad, other touch devices, power input devices, electromagnetic induction devices, pressure devices, infrared device, and laser device

Further, the following can also be the characteristic of the foresaid electronic device: the said HCI ( Human Computer Interaction ) device is the soft device which is displayed in the input and output device. The said mouse simulator device comprises the touch pad or other input and output devices displayed or set in the said input and output devices. When the mouse function is opened, display or set the soft touch pad or other input and output devices in the overlapping region When close down the mouse function, display the soft key input device in the overlapping region; or

in the input and output device, display, it displays simultaneously the said key input device and the touch pad or other input and output device. Wherein the display region of' one device is the said input or output device comprises but not limited to the following types of devices or their combinations: electronic white board, white board, protection keyboard device, touch screen, touch pad, other touch devices, power input devices, electromagnetic induction devices, pressure devices, infrared device, and the laser device

An HCI method applying a human and computer interaction method of the HCI ( Human Computer Interaction ) device described wherein during the input process through the key input device , if one needs to use the mouse function, he can only open parts or all the mouse function He can choose the mouse simulator devices at least partly operating zone of which locate within the key-press zone or other input devices for operations. Wherein the said input or output device and/or the mouse simulator device comprise but not limited to the following types of input or input and output devices or their combinations, or the soft devices realized in the input and output devices : electronic white board, white board, protection keyboard device, touch screen, touch pad, other touch devices, power input devices, electromagnetic induction devices, pressure devices, infrared device, laser device, and machine.

Further, the following can also be the characteristic of the foresaid HCI method: wherein the said mouse function can be realized through one or more types of the following methods:
Method A, when the mouse simulator device is with the main analog device, it can realize the mouse function singly through the operations to the main analog device.
Method B, when the mouse simulator device is with the main analog device, through the operations to the said main analog device, and the operating key-press it can realize the mouse function Wherein, the operative key-press is used to realize partly or all the key-press functions of the mouse.
Method C, The mouse simulator device is with the main analog device, and there are extra set auxiliary elements in the keyboard Through the operations to the said main analog devices and the auxiliary elements, it can realize the mouse functions;
Method D, if there are the main analog devices in the mouse simulator device, through the operations to the said auxiliary elements, it can realize the mouse functions
Method E, if there are extra auxiliary elements in the mouse simulator device, through the operations to the said auxiliary elements and the original key-press, it can realize the mouse functions;
Method F, The mouse simulator device is with the main analog device, and there are extra set auxiliary elements in the keyboard Through the operations to the said main analog devices and the original key-press, it can realize the mouse functions;

The said mouse function comprises but not limited to one or several following functions: execute, choose, drag, display menu, move cursor, roll display the screen, and the multi directional moving display simultaneously;

The said main analog device can comprise but not limit to the following types of input devices or input and output devices or their combinations: electronic white board, white board, protection keyboard device, touch screen, touch pad and other touch input devices, power input devices, electromagnetic induction devices, pressure devices, infrared device, laser device, and mechanical device.

Further, the following can also be the characteristic of the foresaid HCI method wherein the said mouse simulator devices or the main analog devices thereof are divided into several regions in hidden way, visibly or in display. They consist of the regions for the realization of the cursor moving function, and the at least one region for the realization of the at least one following functions: execute, choose, drag, display menu, move cursor, roll display the screen, and the multi directional moving display simultaneously; And the said each region and its functions are fixed, varied or configurable.

Further, the following can also be the characteristic of'the foresaid HCI method wherein the said mouse function is realized by one main analog device set in the right or left side of the key-press zone of the said key-press device and the several key-presses set in the other side of the keyboard The several key-presses are one or more key-presses back to the upper parts after the key press by the finger among the standard fingering, which are used for the realization of the key-press function of the mouse; Or, the said mouse function is realized partly or all by one main analog device set within the key-press region of the said key input device device and the several key-presses set beyond of the said main analog device. Among these several key-presses, the key-presses by left/right hand operations among the standard fingering are used to realize the functions of the left/right key of the mouse. The key-presses by left/right hand operations among the standard fingering are used to realize the functions of the left/right key of the mouse

Further, the following can also be the characteristic of the foresaid HCI method wherein the said auxiliary elements at least comprise: one auxiliary element for the realization of the cursor movement function and one auxiliary element for the realization of the key-press function of the mouse;

As for the said auxiliary element for the realization of the mouse key press function, it comprises one type or the combinations of the following forms: at least one pointing rod, at least one input device for the object movement control, at least one roller ball for the object movement control, and at least one trolley for the object movement control;

As for the said auxiliary element for the realization of the mouse key press function, it comprises one type or the combinations of the following forms: at least one button for the operation confirmation, at least one pointing rod, at least one roller ball, at least one input device for controlling the movement of the object, at least one trolley and at least one operating key-press which can work under the mouse function mode
Further, the following can also be the characteristic of the foresaid HCI method wherein the said mouse function open and close are realized by one or more following methods:
Open or close down the mouse function by pressing or tapping the independently set button for operative confirmation in the keyboard;
Open or close down the mouse function by pressing or tapping by order the key combination in the keyboard.
Open or close down the mouse function by the method of touching the pointing rod;
Open or close down the mouse function by running once the roller ball;
Open or close down the mouse function by running once the trolley;
Receives the input operations of the keyboard beyond of the operative zone of' the mouse simulator device, and close the mouse function;
If within the set time, it fails to receive the operations of the mouse simulator device or the main analog device in the mouse simulator device, close down the mouse function;
Through the movement method by the finger in the mouse simulator device or within the main analog device in the mouse simulator device, open or close down the mouse function;
The said main analog device can comprise but not limited to the following types of input devices or input and output devices or their combinations: electronic white board, white board, protection keyboard device, touch screen, touch pad, other touch devices, power input devices, electromagnetic induction devices, pressure devices, infrared device, laser device, and machine.

Further, the following can also be the characteristic of the foresaid HCI method wherein when the said movement method by the finger set in the mouse simulator device or within the main analog device in the mouse simulator device is used to open or close down the touch pad, the said movement method being set comprises at least one of the following items:
The movement distance of the finger reaches or exceeds the set value;
The movement speed of the finger reaches or exceeds the set value;
The reciprocating times of the finger reach or exceed the set value;
The pressure(s) of at least one key-press given by fingers reach or exceed the set value;
The finger moves or glides from the surface of one key-press to the surface of the other key-press;
The moving track of the finger meets the set form;
The given point within the region, certain zone or the acme within one certain zone by the click or double click of the finger

Further, the following can also be the characteristic of the foresaid HCI method wherein the said main analog device is to realize the mouse functions as per the following method:
When the said main analog device is open, if there are no prior glides or no clicks, then it will be the first click, to be regarded as the click of the left key of the mouse. The first glide is to control the movement of the cursor;
When clicks, regards the former last operation as the click or the glide. If the click is in the left side of the point of the last click or the final point of the last glide, then it will be regarded as the left key click of the mouse and continue to keep the function of the click; If the click is in the right side of the point of the last click or the final point of the last glide, then it will be regarded as the light key click of the mouse;
When clicks, regards the former last operation as the click or the glide. If it begins to glides or rows within the circle with the radius as M, the centre of which is the final point of the last click or the final point of the last gliding, then either the later glides or row will be regarded as the dragging, till there clicks begin or leave the said main analog device;
In rowing, the previous last operation is regarded as rowing. The region with less than N away from the rowed line and beyond of the circle of the radius as M with the rowed final point as the centre, will be regarded as the middle key of the operative mouse;
The said M and N is the set distance.

Further, the following can also be the characteristic of the foresaid HCI method wherein the said key input device is the soft device, and it can move with the movements of the cursor or the finger When the cursor or the finger move from the present position towards the key-press direction, The facing parts of the finger movement in the whole key input device or the key input device, move synchronously or asynchronously relatively to the finger movement directions

Further, the following can also be the characteristic of the foresaid HCI method wherein: the said mouse simulator device comprises the main analog device. The said region of the main analog device maps all or partly of the screen; when click certain point of the said main analog device, the cursor will move into the point with the mapping relation to the said point in the said screen; meanwhile, when moves one unit in the said main analog device, the cursor also moves one unit in the said screen, or moves several units as per the scale between the said main analog device and the screen size of the said screen. The said main analog device can comprise but not limited to the following types of input devices or input and output devices or their combinations: electronic white board, white board, protection keyboard device, touch screen, touch pad, other touch input devices, power input devices, electromagnetic induction devices, pressure devices, infrared device, laser device, and machine
The HCI ( Human Computer Interaction ) device described above wherein: in the operating to the said mouse simulator device, the application of the soft or hard nails, artificial nails, rings, finger cap, fingering, the finger articles, the hand articles or other articles , together with or in combination with their parts can realize the cursor locating and position displayed.

Further, the following can also be the characteristic of the foresaid HCI device wherein: the said articles for the realization of the cursor locating and displayed position, their materials are: the soft or hard metal, plastics, wooden products, biological products or other soft or hard products

Further, the following can also be the characteristic of the foresaid HCI device wherein: the said articles for the realization of the cursor locating and displayed position, their forms can be the random forms, the one with a cusp, or the global and oval spheres, or 6, 8, 12 or 24 body, or other curved body, and their parts and/or the combinations.

Further, the following can also be the characteristic of the foresaid HCI device wherein: the said mouse simulator device moves by the certain points or parts felt or touched by the human body Thus realizes the locating and/or moving cursor, at least one of the following ones of the formal, hidden, invisible moving cursor, or the visible position, displacement or movement related or the relative position relation with the cursor: The formal, hidden, invisible, or visible order, order configuration, display method, graphic representation, figure, image, the order menu, button, key or the orders or the graphic representation which can be operated click, figures similar to the input and/or the output device, certain points or parts which can be felt and touched by the human body parts, including the centre point or centre parts of finger touch; or judge the input operations as per the pressed strength, coverage or the graphics.

Further, the following can also be the characteristic of the foresaid HCI device wherein: in the operations to the said key input device and/or mouse simulator device, use the shake, vibration, tingling, sense of hotness, twinkling and/or other feelings to realize the handle and tactility.

### Brief Description of the Drawings

Fig1 is structure chart of an HCI device described in Example 1 of this invention;
Fig2 is structure chart of an HCI device described in Example 2 of this invention;
Fig3 is structure chart of an HCI device described in Example 3 of this invention;
Fig4 is structure chart of an HCI device described in Example 4 of this invention;
Fig5 is structure chart of an HCI device described in Example 5 of'this invention;
Fig6 is structure chart of an HCI device described in Example 6of this invention;
Fig7 is structure chart of an HCI device described in Example 7 of'this invention;
Fig8 is structure chart of an HCI device described in Example 8 of this invention;
Fig. 9 is a schematic diagram of layout of an HCI device on the touch screen as described in Example 9 of this invention;
Fig. 10 is a schematic diagram of Fig. 9 without displaying the HCI devices;
Fig.11 is a schematic diagram of layout of an HCI device on the touch screen as describe in Example 10 of this invention, with additional soft keyboard protective film on the HCI device as described in Fig 9;
Fig. 12 is a sectional diagram of the touch screen as described in Fig 11;
Fig 13 is a schematic diagram of the mouse pattern shown on the touch pad surface as described in Example 9 of this invention;
Fig. 14 is a schematic diagram of zone division shown on the touch pad surface as described in Example 9 of this invention;
Fig. 15 is a schematic diagram of zone division shown on another touch pad surface as described in Example 9 of'this invention;
Fig 16 is a schematic diagram of part of keyboard displayed on the handset screen.
Fig 17 is a schematic diagram of the position of part of keyboard on the whole keyboard as described in Fig 16.
Fig 18A and Fig 18B are schematic diagrams of two instruction modes of two-dimensional moving functions of this invention.

### Detailed Description of the Preferred Embodiments

In order to easily achieve the functions of the keyboard and mouse without moving the forearms, the HCI device of the present invention realizes at least part of overlapping of the operating zones of the key input device and mouse simulation device, allowing all normal persons (non-disabled and mentally handicapped, etc.) can complete the operations without moving the arms

In the present invention, the key input devices can be hard keyboard, soft keyboard, any devices to realize input through the key operation, such as control panel. The "KEY" comprises at least one or more of the following: formal, hidden, invisible or visible keys, buttons, icons, menu items, command, command settings, display modes, buttons or commands or icons of click operations, graphics similar to input and/or output devices on the keyboard or control panel; the formal, hidden, invisible or visible keys, buttons, icons, menu items, command, command settings, display modes, buttons or commands or icons of click operations, graphics similar to input and/or output devices on the keyboard or control panel realized or displayed through software.

Mouse simulator devices refer to various kinds of' devices used to realize the mouse functions other than the mouse, such as touch screen, touch pad, track point, buttons, keys, wheels or combination thereof to realize the mouse functions, etc. The said "mouse functions" means various functions that can be realized by the mouse, such as execute (command, icon), select (commands, icon), drag (commands, icon), show the menu, scroll the display screen, move the cursor and so on. All these functions are to be realized by moving the mouse and the left, middle and right keys of the mouse Particularly, the mouse functions of the present invention (also called mouse functions) also include the functions that can be realized by the mouse but without application in the mouse, such as the functions of multi-dimensional simultaneous mobile display disclosed in "Simultaneous multi-dimensional, accelerating and space-saving system display method used in IT filed" (application number of Chinese invention: 200610046372.3) and "Multi-dimensional information display output control method and devices and input devices" (international application number: PCI/CN2007/001333).

The above said key input devices and mouse simulator devices can be hard devices or soft devices, which can be realized by using various kinds of input devices or output devices, such as electronic white boards, white boards, projection keyboard device, touch screen, touch pad and other touch-input devices, electrical input devices, electromagnetic induction devices, pressure devices, infrared devices, laser devices, mechanical devices Among those input devices, some devices can be operated when the fingers keep a certain distance from the input device. The following embodiments made descriptions on some types of them.

In the following detailed description of exemplary embodiments of the present invention, reference is made to the accompanying drawings which form a part hereof, and in which are shown by way of illustration specific exemplary embodiments in which the present invention may be practiced.

### Example 1

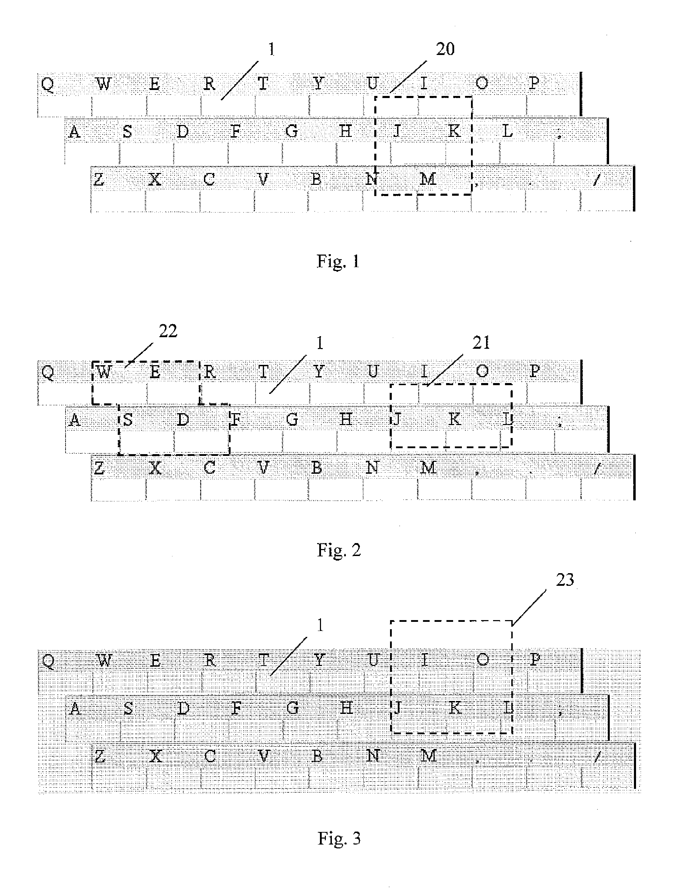

In one embodiment of the present invention, the key input device is hard keyboard 1, the mouse simulator device is composed of hard touch pad 20, and its structure is illustrated in Fig.1 The hard touch pad 20 at least includes a part or the whole surface of an operating key As shown in Fig1, the hard touch pad 20 includes part of surfaces of the keys U, I, H, K, N and M and the whole surface of the operating key J, which occupy an individual areas within the operating key area of hard keyboard 1 This area includes the part or the whole surface of one or more operating keys, even the operating key area of the hard keyboard is set as the hard touch pad. The hard touch pad 20 can be divided into a variety of small hard touch pads if divided according the boundary of the normal key mapping The structure and working principle of each small hard touch pad are equivalent to a hard touch pad of prior arts, combined to realize a complete touch pad The small hard touch pad can be small display block or small touch screen (each display block is a small display screen or a small touch screen), and this small touch pad or small touch screen is provided with a flexible body that can be reflexed or moved along the vertical direction, which can be pressed, having better feeling

Mouse functions can be divided into two categories: one is the mobile function, which is used to move the cursor to the target position, another type is key function (the middle wheel is regarded as the middle key), which is used for a variety of operations, such as confirmation, selection, execution (double click), dragging, pop-up menu, scroll and so on. The existing hard touch pad can achieve the mobile functions and some functions of the key operations, such as click of left key, double click, drag, etc. Some key functions are realized through the buttons below the hard touch pad In this embodiment, by operating on the hard touch pad, all mouse functions can be realized without moving arms.

As there is overlapping part between the keyboard and hard touch pad, it is necessary to switch the working mode of this part, that is, during the process of keyboard input, open the hard touch pad provided within the operating key area of the keyboard to carry out operations of hard touch pad. Of course, after a group of hard touch pad operations are completed, the hard touch pad should be shut down.

In order to facilitate the operation, it is required to set up the control switch in the keyboard to turn on or turn off the mouse functions, i.e. the functions of the hard touch pad In this embodiment, the control switch functions can be realized via at least one group of key combination. Any key combination (such as Ctrl + L) can be set, by pressing this key combination, the hard touch pad is opened or closed Through the customized operating method, the control switch function can be realized regularly. The said customized operating method can be one or more of the following types: A the movement distance of fingers within the hard touch pad reaches or exceeds the set value; B. the movement late of fingers within the hard touch pad reaches or exceeds the set value; for instance, the length of "√" or "x" of 5 seconds exceeds 5 cm; C. the movement trajectory of the fingers within the hard touch pad conforms to the set form, such as ,"□" "√' "x" "X"; D. click or double-click the fixed points, an area, the vertex of' an area (such as key frame).

In this embodiment, operations on the hard touch pad are expanded. Through the following method, all the mouse functions are realized:

After the hard touch pad is started up, if no slide or no click before, the first time of click is regarded as click of the left key of the mouse and the first time of slide is to control the cursor movement. When click, if the final operation is click or slide , then click the point of the final click or the left side of the final point of the final slide is regarded to click the left key of the mouse and continue to maintain the function of click, or regarded as setting of other functions; if' click the point of the final click or the right side of the final point of the final slide is regarded to click the right key of the mouse; if beginning slide within the circle of 8 mm (or other set value M) radius with the center of the point of the final click or the final point of the final slide, then the following slide is regarded as dragging, until there is another click; when sliding, if the final operation is slide, within the area of less than 8 mm (or other set value N) away from the final sliding line and beyond the circle of radius 8 mm(or other set value M) with the center of the final slide point, it is regarded as operation of the middle key of the mouse (such as scroll function)

In addition, touch screen or touch pad can realize the soft keyboard. Touch and knocking represent input of appropriate symbols, text, images, graphics, execution of the functions of some commands/keys, and so on; slide is used as mouse or multi-dimensional dynamic function; when slide exceeds 5 mm, start up the mouse simulator device of the touch screen, referring to 20 in Fig 1. When clicking to input characters, close the touch screen for keyboard operations

In the following, the method to individually realize the mouse function via hard touch pad is called method A, which can also be realized by touch-screen, projection keyboard, electronic white board and other input devices instead of hard touch pad.

### Example 2

In this embodiment, the key input device of this HCI device is hard keyboard 1. The mouse modulator device includes the first hard touch pad 21 and the second hard touch pad 22 and its structure is illustrated in Fig.2. The first hard touch pad 21 includes part of the surface of the keys U, I, O, J, K and L; while the second touch pad 22 includes the whole surface of the keys W, E, S and D. The hard touch pad occupies two individual areas within the key area for hard keyboard operation. The first and the second hard touch pads 21 and 22 have two different forms. Of course, in the actual use, the first and the second hard touch pads 21 and 22 can adopt the same forms. In other embodiments, the hard touch pad can occupy more independent regions (more than 2).

In this embodiment, the key combination or the customized operation on the hard touch pad can be adopted to control the opening and closing the mouse functions, i.e. the functions of hard touch pad. The two hard touch pad can be controlled at the same time or individually controlled, or be set as simultaneous control or independent control The specific operations to realize the mouse function on the hard touch pad are the same as method A as described in Example 1.

### Example 3

In this embodiment, the key input device of this HCI device is hard keyboard 1. The mouse modulator device includes hard touch pad 23 and the four operation keys of "A", "S", "D" and "F" of the hard keyboards. Its structure sees Fig.3. The hard touch pad 23 includes the part or the whole surface of at least one operational key and the surface of the vacant area within or beyond the operational keys. In Fig.3, the hard touch pad 23 includes part of the surface of the operational keys U, O, H, J, K and L and the whole surface of the operational key I, as well as the surface of the vacant area within the operational keys U, I and O. In this embodiment, the hard touch pad 23 occupies an independent region, comprising the operational key region of part of the hard keyboard and part of the vacant region In other embodiments, the hard touch pad may occupy more independent regions, and its area can be greater than the operational key region of the hard keyboard.

In this embodiment, the key combination or customized operations on the hard touch pad can be adopted to open and close the mouse functions, that is, to open and close the functions of' the hard touch pad 23 and the above 4 keys. The method to realize the mouse functions is similar to the combination of the hard touch pad and buttons on the notebook computer, only the four keys of "A", "S", "D" and "F" replace the traditional buttons to realize the key functions of the mouse. Of which, the key "F" is used to realize the function of the right key , key "A" is used to realize the function of the left key and the keys "S" and "D" can realize the functions of the middle key. After the mouse functions are opened, the functions of a number of keys are switched to the functions of the mouse keys In another way, only three keys "A", "S", "D" or "S", "D", "F" are used to realize the functions of the left, middle and right keys from left to the right.

The reason for the use of the above several keys is that, according tot eh standard fingering, in the input interval, the left hands of persons will return to the keys, in this way, after the keyboard is switched to functional mode of the mouse, the key functions can be realized with two hands but without moving fingers, so as to enhance the input efficiency. Apparently, when the hard touch pad is provide on the left side of the keyboard, use of three or four of the keys of "J", "K", "L" and " ; " can realize the functions of left, middle and right keys of the mouse.

In anther embodiments, after opening the hard touch pad, the whole keyboard is under the operational mode of mouse key The operation of any one key of the left hand in the standard keyboard fingering is regard as the operations on the left key of the mouse, and the operation of any one key of the right hand is regarded as the operations on the right key of the mouse Of' course, more functions can be defined through other methods.

In yet another embodiment, the three operating keys "N", "M" and "," below the hard touch pad are used as the left, middle and right keys respectively.

In the following, the method to realize the mouse functions via the hard touch pad and operating keys is called method B. of course, based on the structure in this embodiment, the method A can also be adopted to realize the mouse functions.

Under the basis of examples 1, 2 and 3, the operational key region of the hard keyboard is provided at least one track pint, at least one roller ball to control the object movement and at least one roller wheel to control the object movement and/or at least one button to confirm the operations, which constitutes the following new examples

### Example 4

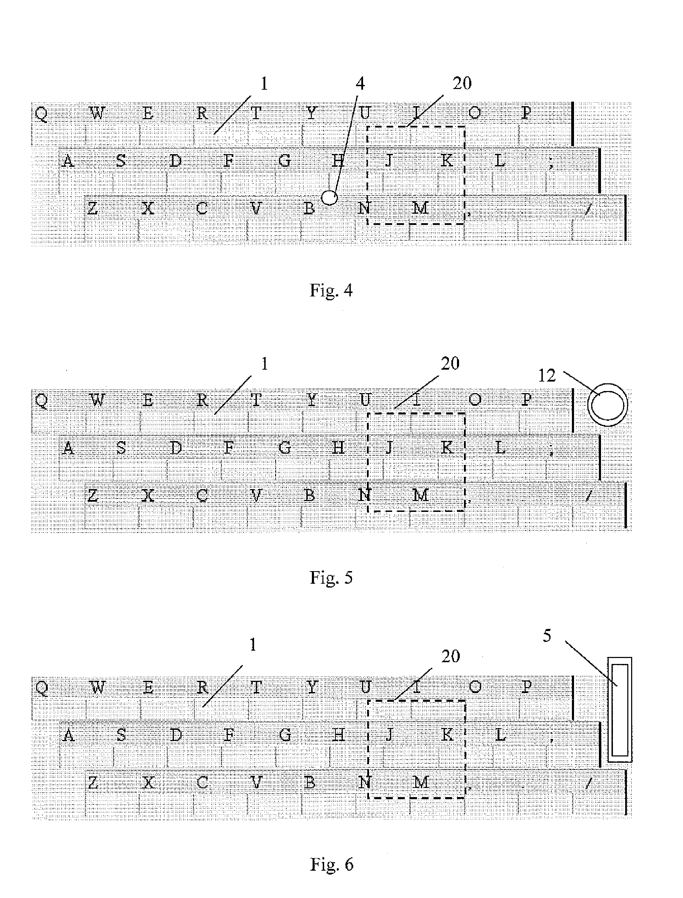

Referring to Fig.4, based on the embodiment of the example 1 of the HCI device, a track point 4 is provided among the operating keys G, H and B the keyboard of the HCI device is the hard keyboard 1, and the mouse simulator device includes hard touch pad 20 and the track point 4. Of' course, the track point 4 can also be provided among other operating keys. In this embodiment, although only the track point 4 is given, a variety of tract points can be set up Similarly, a track point can be added on the basis of the structures described in Example 2 and example 3 to obtain other methods.

In this embodiment, the track point can be used to open and close the mouse functions, for instance, to open or close the mouse functions of the hard touch pad and the track point by touching the track point Of course, the opening and closing of mouse functions can also be realized by key combination, customized operating method of hard touch pad, and so on The track point can be used to realize the mouse functions.

In this embodiment, for realization of the mouse functions, traditional hard touch pad is used to realize the mouse movement and part of the key functions. By knocking the above track point 4, the functions of clicking the right key (or left key, middle key) of mouse can be realized. When a variety of track points are set up, all the key functions of the mouse can be realized. For example, when setting two track points 4 arranged on the left and right, the functions of the left and right keys of the mouse can be realized Or setting of 3 buttons realizes the functions of the left, middle and right keys of the mouse. In addition, the track point, similar to the hard touch pad, has the function of moving the mouse, i.e. to operate the track point and hard touch pad can move the cursor. In the following, the method to realize the mouse functions via the hard touch pad and the auxiliary components arranged on the keyboard is called mode C.

Of course, based on the structure in this embodiment, mode A and mode B can also be adopted to realize the mouse functions.

### Example 5

Referring to Fig. 5, under the basis of Example 1, for the HCI device in this embodiment, a rolling ball 12 is provided to control the target movement on the right side of' the operational keys. The key of HCI device is hard keyboard 1 and the mouse simulator device includes the hard touch pad 20. Of course, the rolling ball 12 can also be arranged on other positions Even the gap between some operational keys can be increased and the rolling ball 12 can be placed in this gap. In this embodiment, although only one rolling ball 12 is given, more rolling balls can be arranged Similarly, a rolling ball can be added on the structure described in example 2 and example 3 to obtain other methods.

In this embodiment, rolling ball 12 can be used to control the opening and closing of mouse functions, for instance, by touching the rolling ball, open or close the hard touch pad The mouse functions can be realized through mode A or mode B.

However, based on the above structure, in other embodiments, the functions of opening and closing of the hard touch pad can be realized through key combination and the customized operational mode of the hard touch pad, and so on The rolling ball 12, as a part of mouse modulator device, can be used to realize the key functions of the mouse, for instance, used to realize the functions of the scroll or cursor movement of the keys for the mouse, that is, use of mode C realizes the mouse functions.

### Example 6

Referring to Fig 6, under the basis of Example 1, for the HCI device in this embodiment, a roller wheel 5 is provided to control the target movement on the right side of the operational keys The key of HCI device is hard keyboard 1 and the mouse simulator device includes the hard touch pad 20. Of course, the roller wheel 5 can also be arranged on other positions. Even the gap between some operational keys can be increased and the roller wheel 5 can be placed in this gap In this embodiment, although only one roller wheel 5 is given, more roller wheels can be arranged. Similarly, a roller wheel can be added on the structure described in example 2 and example 3 to obtain other methods

In this embodiment, roller wheel 5 can be used to control the opening and closing of mouse functions, for instance, by touching the roller wheel, open or close the hard touch pad The mouse functions can be realized through mode A or mode B.

However, based on the above structure, in other embodiments, the opening and closing of the mouse functions can be realized through key combination and the customized operational mode of the hard touch pad, and so on. The roller wheel 5, as a part of mouse modulator device, can be used to realize the key functions of the mouse, for instance, used to realize the functions of the scroll of the keys for the mouse, that is, use of mode C realizes the mouse functions.

### Example 7

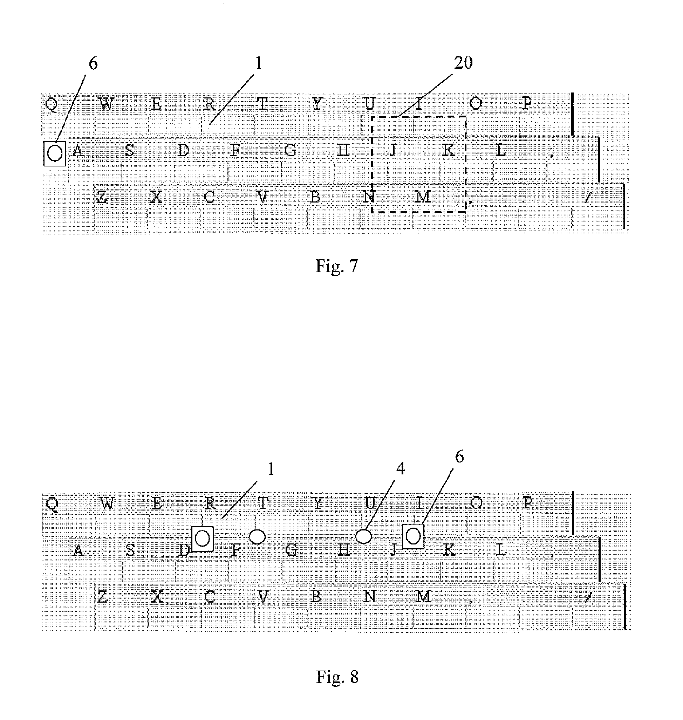

Referring to Fig. 7, under the basis of Example 1, for the HCI device in this embodiment, a button 6 is provided to confirm the operation on the left side of the operational keys The keyboard of HCI device is the hard keyboard 1 and the mouse simulator device includes the hard touch pad 20 and button 6. Of course, the button 6 can also be arranged on other positions Even the layout of the keyboard can be changed to arrange the button 6 to an appropriate position. In this embodiment, although only one button 6 is given, more buttons can be arranged. Similarly, buttons can be added on the structure described in example 2 and example 3 to obtain other methods

In this embodiment, the opening and closing of mouse functions can be realized by the key combination and the customized operating method of the hard touch pad, and other methods.

In this embodiment, the mouse functions are realized by mode C The traditional hard touch pad is used to realize the mouse movement and part of the key functions. By knocking the button 6, the functions of clicking the right key (or left key, middle key) of mouse can be realized. When a variety of track points are set up, all the key functions of the mouse can be realized. For example, when setting two buttons arranged on the left and right, the functions of the left and right keys of the mouse can be realized. Or setting of 3 buttons realizes the functions of the left, middle and right keys of the mouse.

However, based on the above structure, in other embodiments, the opening and closing of mouse functions can be realized through the button 6, for instance, , by touching the rolling ball, open or close the hard touch pad and the functions The mouse functions can be realized through mode A or mode B

### Example 8

In this embodiment, the key input device of' the HCI device is hard keyboard 1, and the mouse simulator device includes track point 4 and button 6, two for each. Referring to Fig. 8, under the basis of ordinary standard keyboard, a track point 4 is arranged on the positions among the operational keys of R, T and Y and among the keys of Y, U and H respectively and a button 6 is arranged on the positions among the operational keys of E, R and D and among the keys of U, I and J respectively. Apparently, the positions to set the above track point and buttons can be changed, for instance, it can be set up among the operational keys D, F and C, among J, N and M, among F, G and V, among H, J and N and among T, Y and G, etc. In addition, the number of the setup tract point 4 and button 6 can be one or more (three or more)

In this embodiment, the opening and closing of mouse functions can be realized by key combination, customized operating method of hard touch pad, and so on The mouse functions can be realized through the following methods: the two track points 4 set among the operational keys of R, T and F and among the keys of Y, U and H are separately used to control the cursor movement and realize the wheel's scroll functions of the mouse (optional). The button 6 set among the operational keys of E, R and D and among the keys of U, I and J (located at the left and right of the center line of the keyboard) can be used to realize the function of click and double-click of the left and right keys of the mouse. In the following, the method to realize the mouse functions totally through the auxiliary component within the operational key region without through the hard touch pad is called mode D.

However, based on the above-mentioned structure, in other embodiments, one button or track point can be added to control the opening and closing of the mouse function, or to realize the function through the customized operations of the track point such as knocking.

The aforesaid HCI device can be integrated with the electronic devices such as handsets with hard keyboard and computers, and automatic mechanical devices. That is, this invention provides an electronic device adopting a hard keyboard, which can adopt any one HCI device mentioned above This HCI device can be arranged on the host of the electronic device, for instance, hard touch pad or auxiliary components are arranged on the part or the whole surface of the fixed operational keys of current notebook computers, or on the surface of the vacant region between the operational keys. Or, the said hard touch pad or auxiliary components are arranged on the keyboard of the desktop. The mouse functions of these equipments are very sensitive, easily set to the most sensitive mode, like a touch pad

There are many modifications for the above embodiment that the key input device is hard keyboard. In the following, some embodiments are made in details for the soft keyboard

### Example 9

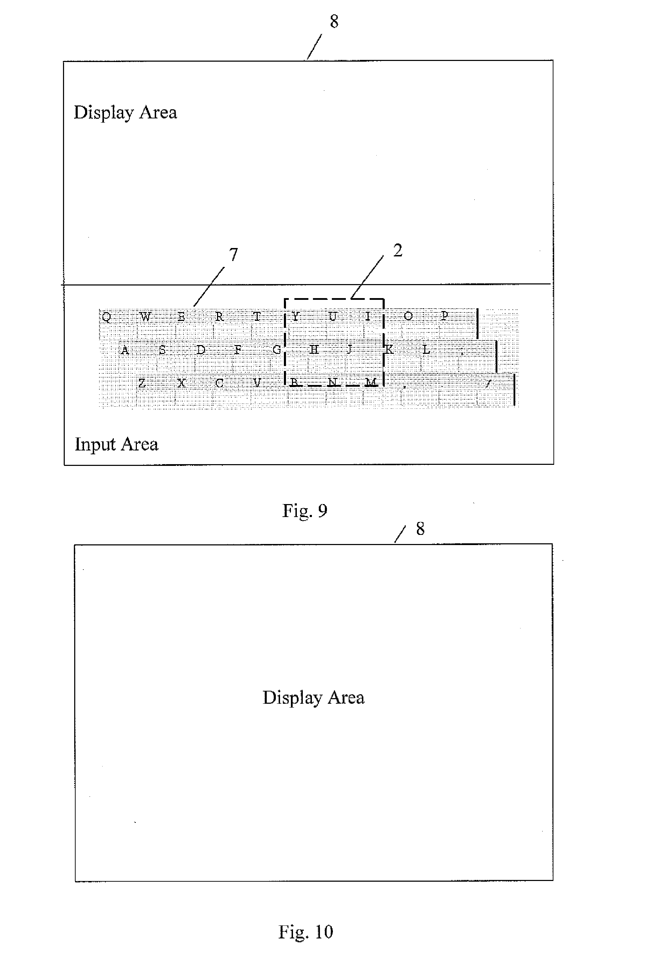

In this embodiment of the present invention, the key input device is soft keyboard 1, the mouse simulator device is soft touch pad 2, and its structure is illustrated in Fig.9. The soft keyboard 7 and the soft touch pad 2 are both displayed within the input region of the touch screen 8 ( or other input device that displays the information, such as electronic whiteboard, whiteboard, projection keyboard device, touch screen, touch pad and other touch-input devices, electrical input devices, electromagnetic induction devices, pressure devices, infrared devices, laser devices, mechanical devices that is, the mouse simulator device and key input device both can be realized by the input devices that can display the information same for other embodiments). Because both the soft keyboard 7 and the soft touch pad 2 are realized by "software" modes, the performance is that the soft touch pad 2 partly or wholly overlaps with at least one operational keys of the soft keyboard 7. In this embodiment, the functions of the soft keyboard displayed on the touch screen are the same as those of the hard keyboard of IBM ThinkPad X61s notebook computer, which can realize the command key and key combination of the keyboard, such as Ctrl + S, Ctrl + A, Ctrl + C, Ctrl + V, Ctrl + N, Win + E and Win + M and so on, and support simultaneous input For instance, if the interval for pressing the two keys is within 100 ms (this value can be set), it is regarded as the key combination of simultaneous input The size of keys and keyboard are the same as that of the hard keyboard of IBM ThinkPad X61s notebook computer There are IE, WORD, Outlook, Power key and other shortcut keys, and slight changes of the outside key position and the position of the indicator light allow the soft keyboard to present rectangular The original space key reduces to leave the left side of the space key as the switching key.

In this embodiment, the surface of the soft touch pad 2 includes part of the operational key region and part of the vacant region The structure and form displayed are similar to Fig. 3 that adopts the hard keyboard. Apparently, for any one of HCI device structure that adopts the hard keyboard described from example 1-9 and various deformed structures mentioned in these embodiments, they can be realized by software, among them, for the touch pad, buttons, track points and roller wheels, graphics and signs can be set up in the appropriate positions of the touch screen to realize its functions through software, which can be called soft touch pad, soft button, soft track point and soft roller wheel, and thus obtained the appropriate programs on the touch screen. For example, for the example 3, the keys of "A", "S", "D" and "F" on the soft keyboard can be used to realized the key functions of the mouse, or slightly modified; for instance, the position of the left key of the mouse should be within the rectangle that includes the key F, the position of the middle key should be within a larger rectangle with key SD of width that can accommodate the keyboard, and the right key of the mouse should be in the rectangle including the key A. Other corresponding circumstances of embodiments are not depicted one by one in details here.

In the aspect of display, the soft touch pad 2 and soft keyboard 7 are not displayed when displaying the content. The whole surface of the touch screen 8 is the display region Only when the operators requite input, the soft touch pad 2 and/or soft keyboard 7 are displayed in the input region, this process can be realized by the set change-over switch or command, for example, as mentioned above or the operates activate the input region by the touch screen 8 to display the soft touch pad 2 and/or soft keyboard 7.

The overlapping of soft touch pad 2 and soft keyboard 7 displays that, the method that the soft touch pad 2 covers the soft keyboard 7 can be adopted Generally the covering method is that, the soft touch pad has an external frame, and its internal part is transparent or nearly transparent, with its transparency not affecting the operators to use the soft keyboard 7, Of course, covering the soft touch pad 2 by soft keyboard 7 with software can also achieve the similar effect.

The display of the overlapping of the soft touch pad 2 and the soft keyboard 2 can be one device of' current work, when necessary, switch to display of another device, which can be realized by a simple change-over switch or a button, for instance, a return soft button can be arranged on the soft touch pad 2 and soft keyboard 7 to return its corresponding state, to realize such functions. Preferably, it can be combined with the opening and closing of the mouse functions, displaying the soft touch pad in the overlapping region when opening the mouse functions and displaying the soft keyboard in the overlapping region when closing the mouse functions. Such method that can be simultaneously used/ displayed of different input devices in the same region or used /displayed of different input devices in different time is called regional overlapping. In the above embodiment, use of the same input device in the same region realizes the key input function and mouse function(or other function combination) is called regional reuse in the text, for instance, simultaneously used as the block touch pad of the keys and the touch pad.

The various implementation methods and possible changes mentioned above also relate to how to set the opening or closing of a control switch to control the touch pad (soft or hand). The modes mentioned in examples 1-8 are hard control switch for the hard keyboard and soft control switch for the soft keyboard. For instance, such soft control switch can be soft tract point, soft roller wheel, independently set soft buttons to confirm operations, key combination or customized operational method on the touch pad, or the combination of'the above modes

In this embodiment, the fallowing special method can be adopted to realize the mouse function on the touch pad. Such method belongs to method A, but different from existing operations of touch pad In the following text, it is called mode A_{E} :

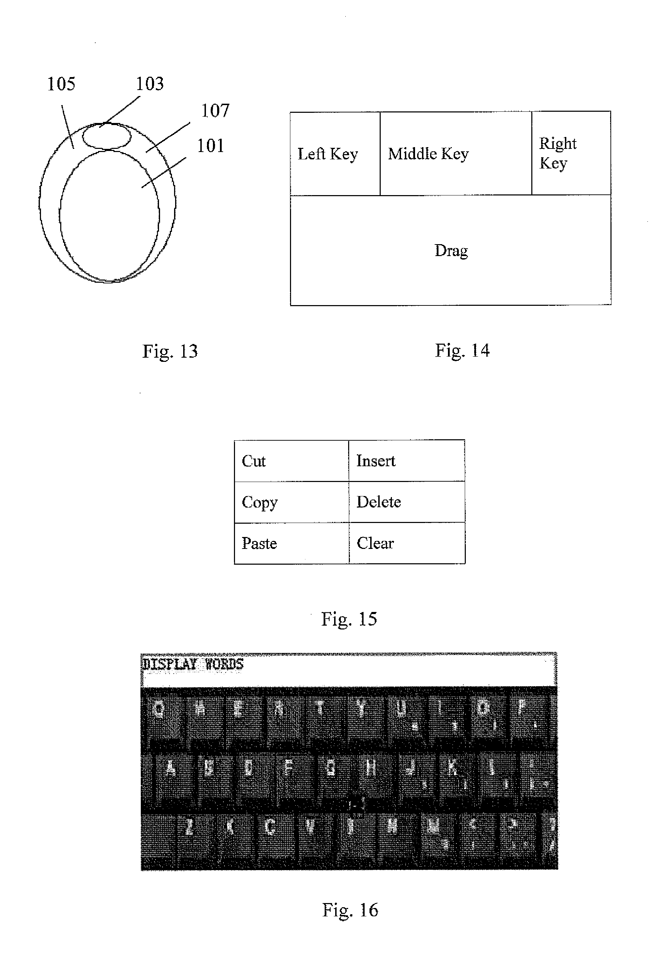

After the touch pad is opened, a form similar to or close to the mouse between completely transparent and completely opaque displayed on the touch pad surface, such as the patterns in Fig 13 and Fig.14.

The pattern in Fig 13 simulates the shape of mouse, including an oval-shaped outer profile, a small oval 103 in the center of the upper part and a large oval 101 below. The remaining part of the profile is divided into the left part 105 and the right part 107 by the two ovals The elliptical region 101 is used to provide the function of the whole region of regular touch pad, beginning slide from the oval 101 to realize the functions of mouse cursor movement, drag, selection, and so on; the oval 103 region is used to provide the functions of the middle key of the mouse, beginning slide from the upper oval 103 to realize the screen scroll and other control functions The remaining left part 105 is used to provide the functions of the left key of the mouse, click and press this region can realize the appropriate functions of clicking and pressing the mouse left key The remaining right part 107 is used to provide the functions of the right key of the mouse, click this region can realize the appropriate functions of clicking the mouse tight key.

The pattern in Fig14 is a rectangle, including the touch control region below and the soft buttons of the left, middle and right keys above. Clicking and pressing the displayed soft buttons of left, right and middle keys on the touch pad or touch screen can respectively perform the corresponding operations of the left, tight and middle keys when actually clicking the mouse.

The patterns of Fig 13 and Fig 14 can be set visibly or invisibly on the touch pad or the touch screen. Clicking or sliding on different regions can perform corresponding operations. The cursor similar to the touch screen can be set visibly or invisibly on the touch pad or the touch screen to realize the similar functions of visible display of cursor on the touch screen.

For the above design, the touch pad region can map the full-screen (that is, when moving a unit on the touch pad, the cursor can move several units on the screen). Or when moving a unit on the touch pad, the cursor moves a unit on the screen

In other embodiments by realizing the mouse moving functions with track point, the pattern of the touch pad can be designed to the rectangle as shown in Fig 15, divided into the left and right parts. On the left side, from the upper part, there are at least 3 rectangular regions to realize the operations of cut, copy and paste, on the right side, from the upper part, there are also at least 3 rectangular legions to realize the operations of insert, delete, and clearance. Of course, the above division is only an example. There are many selections on the number, location and operation of the regions. Meanwhile, the touch pad can be configured to a variety of legions according to different ways and these regions can be visible or invisible.

The touch pad or touch screen of said mouse simulator devices used to realize most of' the mouse functions is called the main simulator devices of the mouse. The said main simulator devices can adopt the following types of' devices or combinations: electronic whiteboards, whiteboards, projection keyboard devices, touch screen, touchpad, other touch devices, and electrical input devices, electromagnetic induction devices, pressure devices, infrared devices and laser devices

### Example 10

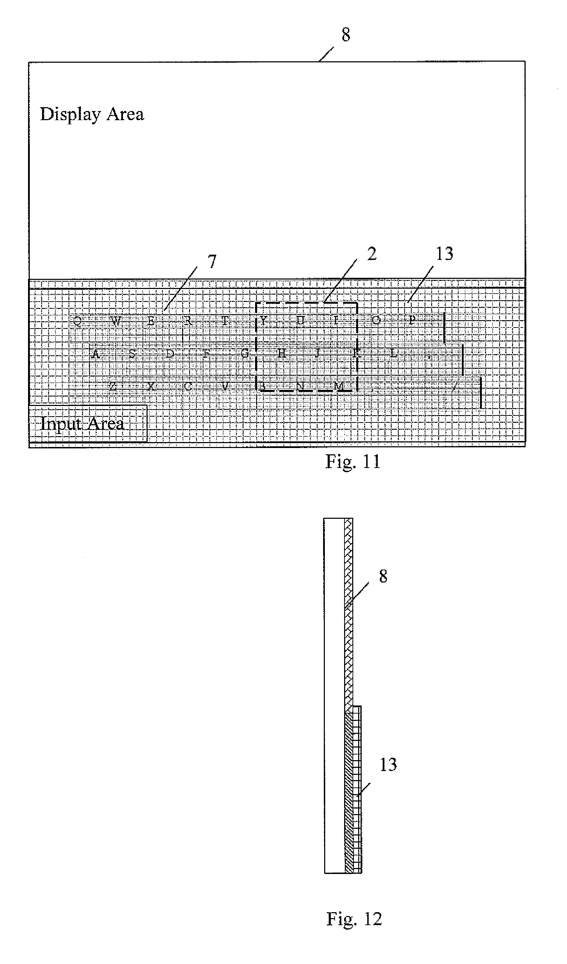

In this embodiment, the soft keyboard protective film 13 is provided on the surface of the soft keyboard 7, and other aspects are same as the example 9, as shown in Fig.11. As seen from Fig 12, the soft keyboard protective film 13 is provided on region that displays soft keyboard 7 on the surface of touch screen 8, generally slightly greater than the occupying area of the soft keyboard 7. For the purpose without distinction when display, the soft keyboard protective film 13of completely transparent or better transparency is provided on the whole surface of the touch screen 8 Here, the transparent protective film 13 is used to change the input feeling Use of the soft keyboard 7 will allow the operators to have a real hard keyboard feeling. There is grooves among the keys, for instance, the depth of 0.5 mm and the width of 0.5 mm can allow people to feel different keys.

In this embodiment, the mouse functions can adopt any one of the above methods A∼ D and A_{E}

For the methods A-D, only the keys, touch pad and auxiliary components for operations are displayed on the soft devices of the screen, without changing the method.

### Example 11

In this embodiment, the composition and operation mode of this HCI device can both be same as Example 9, there is a curtain difference in the display mode of the touch screen.

In this embodiment, the key input device and mouse modulator device of this HCI device are not fixed in the display location of touch screen, different shapes, colors and transparency can be used to distinguish the patterns from the background in the vicinity of the cursors such as Up, Down, Left, Right or fully or partially overlapped with them. If IE, OFFICE, and other applications can be chosen to display on the keyboard (the keyboard can not hold the document) or on the background or to display the two in a staggered manner. The start column can be selected to display closely next to below or above the keyboard.

The HCI device can also be designed to move with the movement of the cursor or finger by pressing For example, when a finger moves (slide, etc) from one position to the pressing direction of the operation, the entire key input device such as keyboard or the part that fingers move toward on the keyboard can move relative to the direction of movement of fingers So, on some occasions where some keys of the keyboard can be only displayed due to restriction of size of the screen, the keys to be operated can be moved to the screen and displayed. As shown in Figure 16, it is a foldable mobile phone, the rectangle in the middle is a touch screen, the mobile phone can be folded in the middle of Figure 16. The mobile phone is characterized by a standard keyboard Due to restrictions on its screen, only a part of the keyboard area can be displayed on the mobile phone. If inputting in this screen in above method, the operation of all keys can be achieved.

Even if all keys of the soft keyboard can be displayed, such movement also make it possible for operators not to have to struggle to stretch a finger for operating some distant keys, however just moving a very short distance in the key direction on the screen can make the keys to be operated automatically move to the vicinity of a finger which can be easily operated, improving the operation accuracy. Above mobile speed of the keyboard can be greater than the speed of the fingers, of course, it can also be same as or less than he speed of the fingers In the mobile process, one or more target keys in the direction that the fingers move towards can be turned into larger or appropriately deformed, other keys adjacent to target keys can be turned into smaller or far away from.

The movement way based on the cursor is also similar, but when required to identify, the movement of the cursor is replaced by the movement of fingers The movement of the cursor can be achieved by using the mouse simulation device or other means in the present invention.

It should be noted that the program of relative movement of keys based on the movement of fingers or the cursor can be used independently, that is, the programs of partially overlapping the key input device and mouse simulation device may not be used. Even in some electronic devices without mouse functions, this method can be used to achieve input without moving the forearm, as well as overcoming the screen size limitations and improving the accuracy of input.

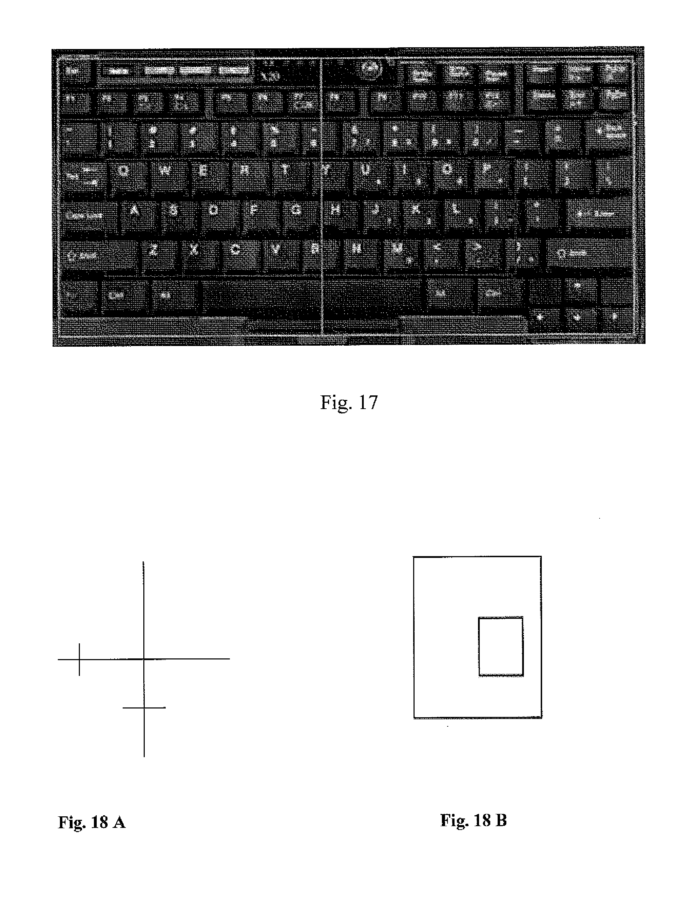

In this embodiment, the touch pad can also be used to achieve two/multi-dimensional synchronous scrolling, that is, the screen scrolling function in the two/multi-dimensional direction, please refer to Figure 16, Figure 17, Figure 18A and 18B. As shown in Figure 16, it is a part of the keyboard whose position in the keyboard is shown in Figure 17, In Figure 18A and 18B, by moving the cross and different size of rectangular respectively, indicate the part of the keyboard in Figure 16 the specific position in the whole keyboard This feature can be set to the mouse middle key functions which can be operated and displayed as per the area corresponding to middle key operations in the display area of the touchpad shown in Figure 13 and Figure 14 The short line on the cross in Figure 18A indicates the abscissa and ordinate currently displayed in the whole graphics, on the contrary, moving the short line on the cross currently display changes in the abscissa and ordinate in the whole graphics, with +-shaped instruction A small rectangular in Figure 18B stands for a area being displayed, a big rectangle stands for the displayed documents, displaying changes in the position and the small rectangular stands for its position and corresponding changes compared with the big rectangle Move nimbly and follow promptly, as long as it is the curve( can be terminated at any location) started from the middle key can be used to achieve multi-dimensional mobile display at the same time.

In addition, the keyboard keys or symbols can be characterized by a variety of colors, such as: Q, W, E, R, T, Y, U, I, O and P. If the first color is adopted, such as blue; A, S, D, F, G, H, J, K and L,: If the second color is adopted, such as red; Z, X, C, V, B, N, M,,,., /, If the third color is adopted, such as green. In terms of display effect, pressing can display color flicker \ luminescence\ transform and so on; soft keyboard \ phone keyboard \ computer keyboard of computer for games displays color flicker \ luminescence \ transform

In this embodiment, there are a wide range of displayed keyboards of this HCI device, shift +1 or a variety of other means can be used to achieve the switch among a wide range of soft keyboard For instance, Shift+S\D\F can be used to choose at least three kinds of commonly used keyboards: (punctuation) sign keyboard, phonetic keyboard, other commonly used symbol input keyboard, mobile phone, game keyboard, etc. In addition, the size and shape of display area of the above-mentioned human-computer interaction device can also be adjusted If the keyboard can be minimized, dragged and closed, smaller and bigger in size On 17" and 14.1" widescreen, the displayed size of the keyboard should be same as the actual size.

The HCI devices realized on the touch screen can be integrated with the touch-screen handset, computer and other electronic devices, automatic mechanical devices That is, this invention also provides a touch-screen electronic device to adopt any one of the above HCI device This HCI device can be displayed in the touch screen of the electronic device, or to control wether to display on the touch screen of the electronic device by touching the display control switch of the input region, hardware or software. The advantages of such a method is to remove the hard keyboard and touch pad on the electronic device that occupy more space, that is, provide more space for the screen More specifically, the keyboard, mouse, display and touch screen are re-used and integrated, and integrated with the computer, allow HCI more convenient, having more display space or making use of more display space, while allowing the computer, handset, PDA, PIM, home appliances to be more convenient and powerful, they become more smaller, with more display space or making full of more space, easy to carry and use.

Because the mouse functions is very mature technology for the realization in a computer or in the internal logic computing devices, the realization of the mouse functions described herein mainly focus on the operating mode and operating targets. Based on them, ordinary skilled persons can easily perform this application

One of the methods described in this invention is the method to open or close the mouse function. Besides the above introduced methods in the said embodiments, there are also other methods. Hereby, we will collectively make the explanations, which comprise one or several combinations of the following methods:

By pressing or knocking the operation confirmation buttons independently set in the keyboard, open or close the mouse function.

This method is easy to understand As is shown in figure 6, set one button in the keyboard, and press once the mouse opening or close function, then press once the mouse opening or close function. The keyboard can be the hard keyboard or the soft keyboard. Of course, the corresponding button is also the hardware button or the soft button.

By pressing or knocking by order the key combination in the keyboard, open or close the mouse function.

This method is easy to understand, since it is commonly used in the key combination of the computer. Such as Ctrl+Alt+del is the warm boot key combination normally used in the computer In this invention, we can randomly set the key combinations(only that they will not make conflicts with the key combinations of the system), such as Ctrl+L, Alt+O, Shift + U. In application, press once the key combination or close the mouse function, then press for the second time the key combination to close or open the mouse function. The keyboard can be the hard keyboard or the soft keyboard As for the soft keyboard, the method to press the key combination can be used to open or close the mouse function.

Open or close the mouse function by the method of touch pointing rods

In this method, we set pointing rods within the operating key-press zone of the hard keyboard. Touch once the pointing rods, and open or close the mouse function Touch for the second time to close or open the mouse function.

By the method of running the roller ball to open or close

In this method, we set roller balls within the operating key-press zone of the hard keyboard. Touch once the roller ball, and open or close the mouse function Within this process, if we run the roller balls continually (we can set its delay time, if it exceeds the delay time, then it can be regarded as not in continuation), then the roller ball function of the common mouse can be realized; Run once again the roller ball to close or open the mouse function.

By the method of running the roller ball to open or close

In this method, we set trolleys within the operating key-press zone of the hard keyboard. Touch once the trolley, and open or close the mouse function Within this process, if we run the trolleys continually (we can set its delay time, if it exceeds the delay time, then it can be regarded as not in continuation), then the trolley function of the common mouse can be realized; Run once again the trolley to close or open the mouse function.

Receives the input operations of the keyboard, and close the mouse function

During the input operating process by the application of the mouse simulator device, once the system receives the input operations of the keyboard beyond the keyboard operating zones of the mouse simulator device, then it will close immediately the mouse function, to prevent from pressing or knocking the key-press within the mouse function zone during the input process to generate the malfunction This equals to that one operating press-key beyond of the mouse simulator device has been regarded as the control switch Of course, at this time, it can not be applied in the situations that the press-key is applied to realize the mouse press-key function

Within the setting time, if it fails to receive the operations of the mouse simulator device, close the mouse function

During the process of the input operation by the mouse simulator device, if the system didn't receive the operations of the mouse simulator device within the setting time, close the mouse function. It is so done to prevent from pressing or knocking the press-key of the mouse simulator device during the stand-time to generate the malfunction.

By means of the moving mode in the touch pad configured by fingers, to open or close the mouse function

Since the finger touch pad is the artificial operations, their forms are varied, and the realization ways are also complicated There are mainly the following several control ways:
1) The moving distance of the finger in the touch pad reaches or exceeds the setting value
   This method means during the input operation process1 of the keyboard, if one wants to open the mouse function, he only needs to make finger movement of longer displacement within the touch pad zone. Then the mouse function can be opened; The value of this displacement or the movement distance should be larger than the finger natural sliding distance in the press-key during the common keyboard input operation process, to prevent from malfunction. Of course, this moving distance specifically can be set by the system according to the demands.
2) The moving speed by the finger in the touch pad reaches or exceeds the setting value
   In this method, it means during the input operation process of the keyboard, if one wants to open the mouse function, he only needs to move quickly the finger in the touch pad zone, then the mouse function can be opened; The value of this displacement or the movement distance should be larger (or smaller) than the finger natural moving speed in the press-key during the common keyboard input operation process, to prevent from generating malfunction. Of course, this moving speed can be set by the system Since by this moving speed we can set the natural moving speed different with that in the process of the operation, during the input operation process when the mouse function is open, if one wants to use the keyboard input, then he only needs to make rapid movement within the touch pad zone then the mouse function can be closed.
3) The reciprocating of the finger in the touch pad reaches or exceeds the setting value
   In this method, it means during the input operation process of the keyboard, if one wants to open the mouse function, he only needs to make reciprocating movement by the finger for many times in the touch pad zone, then the mouse function can be opened; The value of this reciprocating should be larger than the finger natural reciprocating times in the press-key during the common keyboard input operation process, to prevent from generating malfunctions. Of course, the reciprocating times can be set by the system Since by this reciprocating times we can set the natural reciprocating times different with that in the process of the operation in the touch pad, during the input operation process when the mouse function is open, if one wants to use the keyboard input, then he only needs to make repeated reciprocating by the finger within the touch pad zone then the mouse function can be closed.
4) The pressure of at least one press-key by finger in the touch pad reaches or exceeds the setting value
   In this method, it means during the input operation process of the keyboard, if one wants to open the mouse function, he only needs to force on at least one press-key with the set pressure by finger in the touch pad zone, then the mouse function can be opened; The value of the set pressure should be larger than the finger natural pressure in the press-key during the common keyboard input operation process, to prevent from generating malfunctions. Of course, the set pressure can be set by the system Since by this set pressure we can the natural pressure different with that in the process of the operation in the touch pad, during the input operation process when the mouse function is open, if one wants to use the keyboard input, then he only needs to give the set pressure to at least one press-key by the finger within the touch pad zone then the mouse function can be closed
5) The finger moves from the surface of one press-key to the surface of the other press-key
   In this method, it means during the input operation process of the keyboard, if one wants to open the mouse function, he only needs to glide fingers from the surface of one press-key to the surface of the other press-key, then it can open the mouse function; since this method can work in the fifth method 'when it receives the input operations of the keyboard, it can close down the mouse function', even one uses continually two press-keys within the touch pad in the input operation process of the keyboard, it will not generate the malfunctions.
6) The moving track of the finger within the touch pad accords with the set shape
   In this method, it means during the input operation process of the keyboard, if one wants to open the mouse function, only when the finger moving within the touch pad meets the track of the set shape, then it can open the mouse function; such as, stroke a '√''O'' ^'..., then it can open the mouse function. Of course, the track of this set shape can be set through the system.
   However, during the input process when the mouse function is open, if one wants to make inputs through the keyboard, only when the finger moves within the touch pad meets the track of the set shape, then it can close down the mouse function; such as, stroke a'X'' -'..., then it can close down the mouse function.
7) Click or double click the given point, certain zone or the acme within one certain zone
   As for the HCI ( Human Computer Interaction ) device, only there are the hardware such as the touch pad and the auxiliary elements necessary in the above control method. Then we can use any one of theses control methods to realize the methods to open or close down the mouse function.

Among all the above modes of execution, there we can offer the following precisely located, tactility generating methods:

For example, one needs to realize the precise locating or movement within the input device such as the operations of the touch pad or the touch screen One can use the hardware such as the nails, the nails of the artificial finger-tip shell type, soft or hard ring, finger cap, fingertip and so on to realize the precise locating cursor, the indicating position. Their materials can be: soft or hard metals, plastics, wooden products, biological products and so on; their shapes are random such as: the one with a cusp (it can be the point as the small global like), or the global and oval spheres, or 6, 8, 12 or 24 body, or other curved body, and the combinations of the above parts, such as the duroplasts fingertip loop with the steel ball tips.

In addition, it can move in the centre points or the centre parts of the human body touch parts to the input devices such as the touch pad or the touch screen, to realize the precise locating and movement rapidly. Use the movement, speed or the acceleration of the central points or the central parts of the touch detected coverage by the input device such as the touch pad or the touch screen, to realize rapidly the precise locating and movement When it taps in several keys, then the biggest touch coverage key of this time of touch is judged as the input key

In order for the overlapped positions of the press-key and the touch pad zone, and also realize the tactility in the key press operations, we can set the full transparent thin films with the keyboard grooves and tactility in the keyboard shape in the said overlapped zone. And apply the shake or vibration (such as the shakes like many mobiles, but very light, rather short, we can make the direct ratio between the finger pressure to the touch control screen and the contact coverage of the touch screen), and twinkling to realize the handle and tactility

In summary, it is only the better specific execution mode of this invention. In the contents parts of the invention, we further disclosed many other transformed methods, descriptions of which are omitted here The protection scopes of this invention are not limited to it Any technician familiar with the technical field can make easily thought of the changes or displacements within the technical scopes disclosed in this invention should be included within the protection scope of this invention So, the protection scope of the invention should be defined as per the protective scope in the claim of right.

More over, the above operations of the touch pad can be replaced by the extra induction system Now, it is ok for no touch, it can also be suspended(in certain height, such as <=15mm or 10cm), then it can also realize the related operations.

For example, input only when the operations such as the clicks, strokes/ glides in the touch pad exceeds the due pressure (such as the pressure of the finger resting on it). Only the identification of certain force can call the input by the finger.

### The industrial practicability

In this invention, it sets the touch pad in the operation press-key zone of the keyboard In the input by the keyboard, open the said touch pad to make the operations. It is unnecessary to move the front arms frequently, of high efficiency, convenient to take with Meanwhile, apply the HCI device to the integration of the electronic device and the computer, which allows the more convenient for the human and computer interaction of the computer, to have more display space or make more use of the display space On the one hand, it makes more convenient and powerful functions of the computer, mobile, PDA,PIM and the household appliance. On the other hand, it make them have smaller volumes, which enables to have bigger display space or make more positive use of the display space, convenient to take with and application.

## Claims

1. An HCI ( Human Computer Interaction ) device, comprising the first input device and the second input device, wherein at least parts of the operating zones of one certain or all function(s) of the said second input device locates within the press-key operating zones of the said first input device;
or,
an HCI ( Human Computer Interaction ) device, comprising the second input device or part thereof and the first input device or part thereof, which uses the said region or space within any region of any size at any position of the said part or the whole of the second input device and the said part or the whole of the first input device, that is, wholly or partly overlapping or reuse of part or the whole of region;
or,
an HCI ( Human Computer Interaction ) device, comprising the second input device or part thereof and the first input device or part thereof, which uses the said region or space within any region of any size at any position of the said part or the whole of the second input device and the said part or the whole of the first input device, that is, wholly or partly overlapping or reuse of part or the whole of region; the said regional overlapping or the regional reuse is the regional overlapping or regional reuse in the same time or in different time ;
or,
in the said second input device, at least part operating zone is located within the press-key operating zones of the first input device beyond of the said special/only the mouse function or the limited functional devices; wherein the limited function devices mean the functions of the said device are limited or the numbers of the functions of the device are limited; the first input device beyond of the special/only the mouse function or the limited functional devices can include but not limited to the hard devices or soft devices;
or,
an HCI ( Human Computer Interaction ) device, comprising the second input device and the first input device used to realize the mouse function; wherein the zone which the said second input device locates should at least have partly overlapping with the zone the first input device locates; the zone which the said first input device locates consists of the zones which one or several press-keys locate, and it does not include the zones among each input press-keys;
or,
an HCI ( Human Computer Interaction ) device, comprising the touch pad, the touch screen or other hard input device and the first input device used to realize the mouse function; wherein, the said touch pad, the touch screen or other hard input device are the devices through the touch means; moreover, the zone where the said touch pad, the touch screen or other hard input devices locate should at least have partly overlapping with the zone the first input device locates; the zone which the said first input device locates consists of zones among which one or several press-keys locate;
or,
an HCI ( Human Computer Interaction ) device, comprising
The second input device and the soft first input device for the realization of the mouse function; wherein the zone which the said second input device locates should at least have partly overlapping with the zone which the soft first input device locates, the zone which the said first input device locates consists of the zone where one or several input press-keys locate and the zones among which one or several press-keys locate;
or,
an HCI ( Human Computer Interaction ) device, comprising
The second input device and the first soft input device used for the realization of the mouse function;
or,
all the above said the first input device can be replace into the input device, wherein its input device includes the press-key input device

2. The HCI ( Human Computer Interaction ) device according to claim 1 wherein
the said regional overlapping or regional reuse means the regional overlapping or regional reuse within the same time or the different time; or,
the said first input device is the press-key input device, that is, the device to realize the input through the key operations; The said 'key' comprises one or several types of the following forms: the formal, adelomorphic, invisible, or visible key, button, icon, menu items, order, order configuration, display methods, button or the order or the graphic representation which can be operated by clicks, the figures similar to the input/output devices; the keyboard realized or displayed by the software or the formal, adelomorphic, invisible, visible, hidden type, display type ones in the control panel, or the displayed keys, buttons, icons, menu items, orders, order configurations, display methods, buttons or the orders or graphical representations which can be operated by clicks, the figures similar to the input/output devices; or
the said second input device is the mouse simulator device applied for the realization of' the mouse function; the said mouse function comprises but not limited to one or several following functions: execute, choose, drag, display menu, move cursor, roll display the screen, and the multi directional moving display simultaneously;
the said press-key input device/or the mouse simulator device comprises the following types of the input devices or the input and output device or their combinations, or the realized soft devices in the input and output device: electronic white board, white board, protection keyboard device, touch screen, touch pad, other touch devices, power input devices, electromagnetic induction devices, pressure devices, Infrared device, laser device, and machine

3. The HCI ( Human Computer Interaction ) device according to claim 2 wherein
the said mouse simulator device comprises at least one key parts or all the surface or the parts among the keys or all of the zones; it can locate in one independent zone within the press-key zone of the said press-key input device, or partly locate within the press-key zone, and the left parts locate in other zones;
and/or, the said mouse simulator device reuses with the overlapped zones of the said press-key zones, which at least operates the two modes of the press-key input and the mounting function;
and/or, the said mouse simulator device at least has partly operating zones overlapping or reuse with the press-key operating zones of the said press-key input device; that is, within the same zone, it can work or realize functions of different and randomly several devices.

4. The HCI ( Human Computer Interaction ) device according to claim 2 wherein
the said mouse simulator device comprises one or more auxiliary elements within or beyond of the press-key operating zones of the said press-key input device; theses auxiliary elements are used to realize all or partly the mouse functions of the HCI ( Human Computer Interaction ) device; or, theses auxiliary elements are applied to realize partly mouse functions; wherein it comprises the functions of 'menu display' or 'simultaneous moving display by multi directions'

5. The HCI ( Human Computer Interaction ) device according to claim 1,2 , 3 or 4 wherein
in the said HCI ( Human Computer Interaction ) device, there are also set with one or several control switch(es), used to open or close down the mouse functions; the control switch is the soft control switch or the hard control switch; the regions of the above said switch are: In the regions or their peripheries where the first or the second input devices locate; or,
in the region where the first input device locates overlapping at least partly with the second input device; or,
in the region of the soft/hard desktop computer keyboard type keyboard, laptop computer keyboard type keyboard or the keyboard the length of the keyboard longer than X cm where partly overlapping with the second input device; wherein X is 8,10,12,14,16 or 18; or,
in the region of the soft/hard desktop computer keyboard type keyboard, laptop computer keyboard type keyboard or the keyboard the length of the keyboard or in the region within the Y cm region of the space press-key of the keyboard length bigger than X cm where partly overlapping with the second input device;

6. The HCI ( Human Computer Interaction ) device according to claim 5 wherein
the said control switch uses one type or the combination of the following forms: at least one independently set button, at least one pointing rod, at least one roller ball, at least one trolley, at least one group of key combination, at least one operating press-key beyond of the mouse simulator device zone, at least one automatically defined operating method in the said HCI ( Human Computer Interaction ) device.

7. The HCI ( Human Computer Interaction ) device according to claim 3 wherein
the said mouse simulator device comprises one or more main analog devices, and one or more auxiliary elements set within the press-key zone or its periphery of the said press-key input device; the said main analog device and the said touch device altogether realize all or part mouse functions of the said HCI ( Human Computer Interaction ) device, which at least comprises the auxiliary elements for the realization of the cursor moving function and the auxiliary elements for the realization of the mouse key press function;
the said main analog device includes but not limited to the following types of input devices or the input and output devices or their combinations: electronic white board, white board, protection keyboard device, touch screen, touch pad, other touch devices, power input devices, electromagnetic induction devices, pressure devices, infrared device, laser device, and mechanic device.

8. The HCI ( Human Computer Interaction ) device according to claim 4 or 7 wherein
the said auxiliary element comprises but not limited to one type or the combinations of the following forms: at least one pointing rod, at least one roller ball for controlling the target, at least one trolley for controlling the movement of the object, at least one button for controlling the operation confirmation, at least one touch device and at least one operating press-key works under the mouse function mode.

9. The HCI ( Human Computer Interaction ) device according to claim 1 wherein
the said key input device is a keyboard; the said mouse simulator device comprises one main analog device set at the left or right side of the said keyboard, and several key-presses set on the other side of the keyboard; for these several key-presses, we can choose the standard fingering included one or more key-presses returns to the upper parts when the fingers press the key-press, which is used to realize the key-press function of'the mouse; or,
the said key input device is a keyboard; the said mouse simulator device comprises one main analog device set in the side keyboard, and several key-presses set within the key-press zone of the keyboard and beyond of the said main analog device; among several key-presses, in the standard fingering, the key-press by the left finger is used for the realization of the left key function of the mouse; in the standard fingering, the key-press by the right hand is used for the realization of the right key function of the mouse;
the said main analog device can comprise but not limited to the following types of input devices or the input and output devices or their combinations: electronic white board, white board, protection keyboard device, touch screen, touch pad, other touch devices, power input devices, electromagnetic induction devices, pressure devices, infrared device, laser device, and mechanical device.

10. The HCI ( Human Computer Interaction ) device according to claim 2 , 3 or 4 wherein
the said key input device is the hard keyboard or the control panel; the said mouse simulator device is the hard device; within the key-press zone or its periphery of the said key input device, there also are set one or more hard control switches to open or close down the mouse function; or, in the said mouse simulator device, there are the soft control switches set applied to open and close down the mouse function;
the said key input device is the soft keyboard or the soft control panel displayed in the HCI ( Human Computer Interaction ) device; the said mouse simulator device is displayed in the soft device of the HCI ( Human Computer Interaction ) device; in the said HCI ( Human Computer Interaction ) device, there also are set with one or more hard control switch or soft control switch to open or close the mouse function; the said HCI ( Human Computer Interaction device can comprise but not limited to the following types of the input device or the input and output device or their combinations: electronic white board, white board, protection keyboard device, touch screen, touch pad, other touch devices, power input devices, electromagnetic induction devices, pressure devices, infrared device, and laser device

11. The HCI ( Human Computer Interaction ) device according to claim 2 , 3 or 4 wherein
the said key input device is the displayed soft device in the said HCI ( Human Computer Interaction ) device; and on the surface of the key-press zone, there is set with full transparent or semi-tianspaient films in the key-press form; in this film, there is set with the keyboard grooves with the tactility; the HCI ( Human Computer Interaction ) device comprises but not limited to one type or the combinations of the following devices: electronic white board, white board, protection keyboard device, touch screen, touch pad, other touch devices, power input devices, electromagnetic induction devices, pressure devices, infrared device, laser device

12. The HCI ( Human Computer Interaction ) device according to claim 3 wherein
the said mouse simulator device comprises one main analog device; the said key input device and the said main analog device are both the hard device; the parts of the main analog device in the key-press zone of the said key input device consist of one or more small blocks of' main analog devices of accordant scale with the key-press forms of the said key input device, and divided as per the normal boundary of locations of keys; further, in the small block of the main analog device, there are the flexible mechanisms which flex or move vertically; the said main analog device can comprise but not limit to the following types of input devices or input and output devices or their combinations: electronic white board, white board, protection keyboard device, touch screen, touch pad, other touch devices, power input devices, electromagnetic induction devices, pressure devices, infrared device, laser device, and mechanical device

13. The HCI ( Human Computer Interaction ) device according to claim 3 wherein
the said mouse simulator device comprises a main analog device; the said main analog device is divided into several zones formally, implicitly, invisibly, or visibly or in hidden way, in indication way; the realized mouse function in each zone can be different; each said zones and its functions are fixed, varied or configurable; The said main analog device can comprise but not limit to the following types of devices or their combinations: electronic white board, white board, protection keyboard device, touch screen, touch pad, other touch devices, power input devices, electromagnetic induction devices, pressure devices, infrared device, laser device, and mechanical device.

14. An electronic device comprises the said HCI ( Human Computer Interaction ) device according to any one of the claims 1-13.

15. The electronic device according to claim 14 wherein
the said HCI ( Human Computer Interaction ) device is the handset, other hand-held device or the keyboard type and integrated keyboard of the notebook PC; or, they can be the keyboard of the desktop PC and the mouse simulator device set in the keyboard; or, it can be the mouse simulator device which is set in the keyboard of the said electronic device formally, in hidden way, invisibly, or visibly, displayed, explicitly or hiddenly set in the keyboard of the said electronic device; or, they can be the soft devices which are set in the input and output devices of the said electronic devices which are set formally, in hidden way, invisibly, or visibly, displayed, explicitly or hiddenly in the keyboard of the said electronic device; The said input or output device can comprise but not limited to the following types of input and output devices or their combinations: electronic white board, white board, protection keyboard device, touch screen, touch pad, other touch devices, power input devices, electromagnetic induction devices, pressure devices, infrared device, and laser device.

16. The electronic device according to claim 14 wherein
the said HCI ( Human Computer Interaction ) device is the soft device which is displayed in the input and output device included in the said electronic device; the said input and output device determines the displayed device or contents through the control of the hardware or the software; it comprises the realization of several types of display devices or the snaps of the displayed contents; the said input or output device can comprise but not limited to the following types of input and output devices or their combinations: electronic white board, white board, protection keyboard device, touch screen, touch pad, other touch devices, power input devices, electromagnetic induction devices, pressure devices, infrared device, and laser device.

17. The electronic device according to claim 14 wherein
the said HCI ( Human Computer Interaction ) device is the soft device which is displayed in the input and output device; the said mouse simulator device comprises the touch pad or other input and output devices displayed or set in the said input and output devices; when the mouse function is opened, display or set the soft touch pad or other input and output devices in the overlapping region; when close down the mouse function, display the soft key input device in the overlapping region; or
in the input and output device, display, it displays simultaneously the said key input device and the touch pad or other input and output device; wherein the display region of one device is
the said input or output device comprises but not limited to the following types of devices or their combinations: electronic white board, white board, protection keyboard device, touch screen, touch pad, other touch devices, power input devices, electromagnetic induction devices, pressure devices, infrared device, and the laser device.

18. An HCI method applying a human and computer interaction method of the HCI ( Human Computer Interaction ) device described in any one of claims 1-13 wherein during the input process through the key input device , if one needs to use the mouse function, he can only open parts or all the mouse function; he can choose the mouse simulator devices at least partly operating zone of which locate within the key-press zone or other input devices for operations; wherein the said input or output device and/or the mouse simulator device comprise but not limited to the following types of input or input and output devices or their combinations, or the soft devices realized in the input and output devices : electronic white board, white board, protection keyboard device, touch screen, touch pad, other touch devices, power input devices, electromagnetic induction devices, pressure devices, infrared device, laser device, and machine.

19. The HCI method according to claim 18 wherein the said mouse function can be realized through one or more types of the following methods:
Method A, when the mouse simulator device is with the main analog device, it can realize the mouse function singly through the operations to the main analog device;
Method B, when the mouse simulator device is with the main analog device, through the operations to the said main analog device, and the operating key-press it can realize the mouse function; wherein, the operative key-press is used to realize partly or all the key-press functions of the mouse;
Method C, The mouse simulator device is with the main analog device, and there are extra set auxiliary elements in the keyboard; through the operations to the said main analog devices and the auxiliary elements, it can realize the mouse functions;
Method D, if there are the main analog devices in the mouse simulator device, through the operations to the said auxiliary elements, it can realize the mouse functions;
Method E, if there are extra auxiliary elements in the mouse simulator device, through the operations to the said auxiliary elements and the original key-press, it can realize the mouse functions;
Method F, The mouse simulator device is with the main analog device, and there are extra set auxiliary elements in the keyboard; through the operations to the said main analog devices and the original key-press, it can realize the mouse functions;
the said mouse function comprises but not limited to one or several following functions: execute, choose, drag, display menu, move cursor, roll display the screen, and the multi directional moving display simultaneously;
the said main analog device can comprise but not limit to the following types of input devices or input and output devices or their combinations: electronic white board, white board, protection keyboard device, touch screen, touch pad and other touch input devices, power input devices, electromagnetic induction devices, pressure devices, infrared device, laser device, and
mechanical device.

20. The HCI method according to claim 18 or claim 19 wherein
the said mouse simulator devices or the main analog devices thereof are divided into several regions in hidden way, visibly or in display; they consist of the regions for the realization of the cursor moving function, and the at least one region for the realization of' the at least one following functions: execute, choose, drag, display menu, move cursor, roll display the screen, and the multi directional moving display simultaneously; And the said each region and its functions are fixed, varied or configurable

21. The HCI method according to claim 18 or claim 19 wherein
the said mouse function is realized by one main analog device set in the right or left side of the key-press zone of the said key-press device and the several key-presses set in the other side of the keyboard; the several key-presses are one or more key-presses back to the upper parts after the key press by the finger among the standard fingering, which are used for the realization of the key-press function of'the mouse; Or, the said mouse function is realized partly or all by one main analog device set within the key-press region of the said key input device device and the several key-presses set beyond of the said main analog device; among these several key-presses, the key-presses by left/right hand operations among the standard fingering are used to realize the functions of the left/right key of the mouse; the key-presses by left/right hand operations among the standard fingering are used to realize the functions of the left/right key of the mouse

22. The input method according to claim 18 or claim 19 wherein
the said auxiliary elements at least comprise: one auxiliary element for the realization of the cursor movement function and one auxiliary element for the realization of the key-press function of the mouse;
as for the said auxiliary element for the realization of the mouse key press function, it comprises one type or the combinations of the following forms: at least one pointing rod, at least one input device for the object movement control, at least one roller ball for the object movement control, and at least one trolley for the object movement control;
as for the said auxiliary element for the realization of the mouse key press function, it comprises one type or the combinations of the following forms: at least one button for the operation confirmation, at least one pointing rod, at least one roller ball, at least one input device for controlling the movement of the object, at least one trolley and at least one operating key-press which can work under the mouse function mode.

23. The input method according to claim 18 wherein the said mouse function open and close are realized by one or more following methods:
open or close down the mouse function by pressing or tapping the independently set button for operative confirmation in the keyboard;
open or close down the mouse function by pressing or tapping by order the key combination in the keyboard;
open or close down the mouse function by the method of touching the pointing rod;
open or close down the mouse function by running once the roller ball;
open or close down the mouse function by running once the trolley;
receives the input operations of the keyboard beyond of the operative zone of the mouse simulator device, and close the mouse function;
if within the set time, it fails to receive the operations of the mouse simulator device or the main analog device in the mouse simulator device, close down the mouse function;
through the movement method by the finger in the mouse simulator device or within the main analog device in the mouse simulator device, open or close down the mouse function;
the said main analog device can comprise but not limited to the following types of input devices or input and output devices or their combinations: electronic white board, white board, protection keyboard device, touch screen, touch pad, other touch devices, power input devices, electromagnetic induction devices, pressure devices, infrared device, laser device, and machine.

24. The input method according to claim 23 wherein
when the said movement method by the finger set in the mouse simulator device or within the main analog device in the mouse simulator device is used to open or close down the touch pad, the said movement method being set comprises at least one of the following items:
the movement distance of the finger reaches or exceeds the set value;
the movement speed of the finger reaches or exceeds the set value;
the reciprocating times of the finger reach or exceed the set value;
the pressure(s) of at least one key-press given by fingers reach or exceed the set value;
the finger moves or glides from the surface of one key-press to the surface of the other key-press;
the moving track of the finger meets the set form;
the given point within the region, certain zone or the acme within one certain zone by the click or double click of the finger.

25. The input method according to claim 19 wherein the said main analog device is to realize the mouse functions as pet the following method:
when the said main analog device is open, if there are no prior glides or no clicks, then it will be the first click, to be regarded as the click of the left key of the mouse; the first glide is to control the movement of the cursor;
when clicks, regards the former last operation as the click or the glide; if the click is in the left side of the point of the last click or the final point of the last glide, then it will be regarded as the left key click of the mouse and continue to keep the function of the click; If the click is in the right side of the point of the last click or the final point of'the last glide, then it will be regarded as the right key click of the mouse;
when clicks, regards the former last operation as the click or the glide; if it begins to glides or rows within the circle with the radius as M, the centre of which is the fmal point of the last click or the final point of the last gliding, then either the later glides or row will be regarded as the dragging, till there clicks begin or leave the said main analog device;
in rowing, the previous last operation is regarded as rowing; the region with less than N away from the rowed line and beyond of the circle of the radius as M with the rowed final point as the centre, will be regarded as the middle key of the operative mouse;
the said M and N is the set distance.

26. The input method according to claim 19 wherein
the said key input device is the soft device, and it can move with the movements of the cursor or the finger; when the cursor or the finger move from the present position towards the key-press direction, The facing parts of the finger movement in the whole key input device or the key input device, move synchronously or asynchronously relatively to the finger movement directions.

27. The input method according to claim 18 wherein
the said mouse simulator device comprises the main analog device; the said region of the main analog device maps all or partly of the screen; when click certain point of the said main analog device, the cursor will move into the point with the mapping relation to the said point in the said screen; meanwhile, when moves one unit in the said main analog device, the cursor also moves one unit in the said screen, or moves several units as per the scale between the said main analog device and the screen size of the said screen; the said main analog device can comprise but not limited to the following types of input devices or input and output devices or their combinations: electronic white board, white board, protection keyboard device, touch screen, touch pad, other touch input devices, power input devices, electromagnetic induction devices, pressure devices, infrared device, laser device, and machine

28. The HCI ( Human Computer Interaction ) device according to claim 18 wherein:
in the operating to the said mouse simulator device, the application of the soft or hard nails, artificial nails, rings, finger cap, fingering, the finger articles, the hand articles or other articles , together with or in combination with their parts can realize the cursor locating and position displayed

29. The HCI ( Human Computer Interaction ) device according to claim 28 wherein:
the said articles for the realization of the cursor locating and displayed position, their materials are: the soft or hard metal, plastics, wooden products, biological products or other soft or hard products.

30. The HCI ( Human Computer Interaction ) device according to claim 28 wherein
the said articles for the realization of the cursor locating and displayed position, their forms can be the random forms, the one with a cusp, or the global and oval spheres, or 6, 8, 12 or 24 body, or other curved body, and their parts and/or the combinations

31. The HCI ( Human Computer Interaction ) device according to claim 28 wherein
the said mouse simulator device moves by the certain points or parts felt or touched by the human body; thus realizes the locating and/or moving cursor, at least one of the following ones of the formal, hidden, invisible moving cursor or the visible position, displacement or movement related or the relative position relation with the cursor: The formal, hidden, invisible, or visible order, order configuration, display method, graphic representation, figure, image, the order menu, button, key or the orders or the graphic representation which can be operated click, figures similar to the input and/or the output device, certain points or parts which can be felt and touched by the human body parts, including the centre point or centre parts of finger touch; or judge the input operations as per the pressed strength, coverage or the graphics.

32. The HCI ( Human Computer Interaction ) device according to claim 18 wherein
in the operations to the said key input device and/or mouse simulator device, use the shake, vibration, tingling, sense of' hotness, twinkling and/or other feelings to realize the handle and tactility.
